# EUROPEAN PATENT APPLICATION

(11) **EP 4 822 387 A1**
(43) Date of publication of application: **14.10.2026**
(21) Application number: 24900652.9
(22) Date of filing: 04.12.2024
(51) Int. Cl.: G01S 5/14

(54) **POSITION DETERMINING SYSTEM, POSITION DETERMINING DEVICE, AND POSITION DETERMINING METHOD**

(30) Priority: 07.12.2023 JP 2023206918
(71) Applicant: DENSO CORPORATION, Aichi-pref 448-8661 (JP)
(72) Inventor: SUGIYAMA Hironao, Kariya- city, Aichi-pref., 448-8661 (JP); TAKASHIMA Kei, Kariya- city, Aichi-pref., 448-8661 (JP); SAIKI Takashi, Kariya- city, Aichi-pref., 448-8661 (JP); INAGAKI Tatsuya, Kariya- city, Aichi-pref., 448-8661 (JP); NAKANO Yuichiro, Kariya- city, Aichi-pref., 448-8661 (JP)
(74) Representative: Winter, Brandl - Partnerschaft mbB
(86) International application number: PCT/JP2024/042905
(87) International publication number: WO 2025/121358

(57) **Abstract**

A vehicle-mounted key system, which functions as a position determination system, includes multiple anchors (30a to 30f) each performing ranging communication to measure a distance to a mobile terminal (110), and a DK-ECU that controls the anchors (30a to 30f). The vehicle-mounted key system determines a valid anchor (3E) among the multiple anchors (30a to 30f) based on information related to a position of the mobile terminal (110), and acquires ranging data related to phase difference or time of flight by performing channel sounding ranging using the valid anchor (3E). The vehicle-mounted key system restricts channel sounding ranging in invalid anchors (3D) other than the valid anchor (3E). The vehicle-mounted key system specifies the position of the mobile terminal (110) based on ranging data acquired by the valid anchor (3E).

## Description

### CROSS REFERENCE TO RELATED APPLICATION

This application is based on Japanese Patent Application No. 2023-206918 filed on December 7, 2023, the disclosure of which is incorporated herein by reference.

### TECHNICAL FIELD

The present disclosure relates to a technology for determining a position of a mobile terminal.

### BACKGROUND ART

Patent Literature 1 discloses a short-range wireless communication system that performs a wireless communication with a mobile terminal carried by a user, using short-range wireless communication conforming to a certain standards, such as Bluetooth (registered trademark). The short-range wireless communication system estimates a position of the mobile terminal based on a received signal strength indicator (RSSI) of the radio waves transmitted from the mobile terminal.

### PRIOR ART LITERATURE

### PATENT LITERATURE

Patent Literature 1: JP 2016-171401 A

### SUMMARY

As a wireless ranging technology for measuring a distance to a mobile terminal, except the RSSI-based wireless ranging described in Patent Literature 1, channel sounding ranging using Bluetooth low-energy communication (hereinafter referred to as LE-CS ranging) may be used. In LE-CS ranging, a duration for transmission and reception of signal is longer compared to a wireless ranging using RSSI, and thus may easily cause radio interference.

The present disclosure aims to provide a position determination system, a position determination device, and a position determination method, each of which can suppress an occurrence of radio wave interference in distance measurement using LE-CS ranging method.

In order to achieve the above objective, according to an aspect of the present disclosure, a position determination system includes multiple anchors, each of which is configured to perform a ranging communication to measure a distance to a mobile terminal. The position determination system includes also includes a control device configured to control the multiple anchors. Each anchor performs a channel sounding ranging using Bluetooth low energy communication and acquires ranging data related to phase difference or time of flight. At least one of the control device or one anchor includes a processing circuit. The processing circuit includes a communication control unit configured to determine a valid anchor among the multiple anchors based on information related to a position of the mobile terminal, and restrict the channel sounding ranging in the remaining invalid anchor other than the valid anchor. The processing circuit includes a position specifying unit configured to specify the position of the mobile terminal based on the ranging data of the valid anchor.

According to another aspect of the present disclosure, a position determination device controls each of multiple anchors to perform, as a ranging communication, a channel sounding ranging using Bluetooth low energy communication to measure a distance to a mobile terminal. The position determination device includes a communication control unit configured to determine a valid anchor among the multiple anchors based on information related to a position of the mobile terminal, and restrict the channel sounding ranging in the remaining invalid anchor other than the valid anchor. The position determination device includes a position specifying unit configured to specify the position of the mobile terminal based on ranging data, which is acquired by the valid anchor and is related to phase difference or time of flight.

According to another aspect of the present disclosure, a method for determining a position of a mobile terminal by performing a ranging communication using multiple anchors is provided. The method is performed by executing a process using at least one processor. The method includes: determining a valid anchor among the multiple anchors based on information related to the position of the mobile terminal; performing a channel sounding ranging according to Bluetooth low energy communication using the valid anchor and acquiring ranging data related to phase difference or time of flight; restricting a channel sounding ranging in the remaining invalid anchor other than the valid anchor; and specifying, based on the ranging data acquired by the valid anchor, the position of the mobile terminal.

In the above-described aspects, the ranging data is acquired by performing LE-CS ranging using the valid anchor, while LE-CS ranging of the invalid anchor other than the valid anchor is restricted. Thus, radio wave interference can be suppressed by limiting the number of anchors performing LE-CS ranging.

According to another aspect of the present disclosure, a position determination system includes multiple anchors each configured to perform a ranging communication to measure a distance to a mobile terminal. The position determination system also includes a control device configured to control the multiple anchors. Each anchor performs a channel sounding ranging using Bluetooth low energy communication. An execution mode of the channel sounding ranging includes at least a first mode in which time of flight of a signal is calculated by transmitting and receiving RTT packets, and a second mode in which a phase of a signal is calculated by transmitting and receiving a CW signal. The control device or one of the multiple anchors includes a processing circuit. The processing circuit includes a communication control unit configured to determine the execution mode to be performed by each anchor among the first mode and the second mode based on information related to a position of the mobile terminal. The processing circuit further includes a position specifying unit configured to specify the position of the mobile terminal based on ranging data acquired by the multiple anchors in the execution mode determined by the communication control unit.

According to another aspect of the present disclosure, a position determination device controls each of multiple anchors to perform, as a ranging communication, a channel sounding ranging using Bluetooth low energy communication to measure a distance to a mobile terminal. The position determination device includes a communication control unit configured to determine, based on information related to a position of the mobile terminal, an execution mode to be performed by each of the multiple anchors among a first mode, in which time of flight of a signal is calculated by transmitting and receiving RTT packets, and a second mode, in which a phase of a signal is calculated by transmitting and receiving a CW signal. The position determination device further includes a position specifying unit configured to specify the position of the mobile terminal based on ranging data acquired by the multiple anchors in the execution mode determined by the communication control unit.

According to another aspect of the present disclosure, a method for determining a position of a mobile terminal by performing a ranging communication using multiple anchors is provided. The method is performed by executing a process using at least one processor. The method includes: determining, based on information related to the position of the mobile terminal, an execution mode of a channel sounding ranging using Bluetooth low energy communication to be performed by each of the multiple anchors among a first mode, in which time of flight of a signal is calculated by transmitting and receiving RTT packets, and a second mode, in which a phase of a signal is calculated by transmitting and receiving a CW signal; acquiring ranging data by performing the channel sounding ranging in the determined execution mode; and specifying the position of the mobile terminal based on the acquired ranging data.

In the above-described aspects, the system is capable of switching between the first mode, which transmits and receives RTT packets, and the second mode, which transmits and receives CW signal, depending on the position of the mobile terminal. Thus, by performing the ranging communication in the first mode using RTT packets, which have shorter transmission and reception duration than CW signal, radio interference can be suppressed.

The reference numerals in the parentheses in features are just examples of the correspondence with the specific components in the embodiments, and do not restrict the scope of the present disclosure. In addition, combinations of claims that are not explicitly stated in claims by dependency are also included in a scope of the present disclosure unless there is a particular difficulty existing in the combination.

### BRIEF DESCRIPTION OF DRAWINGS

FIG. 1 is a diagram showing an overall view of a vehicle-mounted key system according to the present disclosure.
FIG. 2 is a block diagram showing an electrical configuration of a vehicle-mounted key system and a mobile terminal.
FIG. 3 is a block diagram showing a detailed configuration of an anchor and a mobile terminal.
FIG. 4 is an example of anchor mounting positions and terminal areas.
FIG. 5 is a table comparing the characteristics of multiple different ranging methods.
FIG. 6 is a diagram showing details of signals transmitted in different execution modes of channel sounding ranging.
FIG. 7 is a table showing an antenna switching example in which antennas are on or off for switching communication paths using phase difference ranging.
FIG. 8 is a table showing an example of information correlated to terminal areas and valid anchors.
FIG. 9 is a block diagram showing a configuration of a processing circuit.
FIG. 10 is a flowchart, together with a flowchart shown in FIG. 11, showing details of a ranging communication process according to a first embodiment.
FIG. 11 is a flowchart, together with the flowchart shown in FIG. 10, showing details of the ranging communication process.
FIG. 12 is an example of valid anchors and unnecessary anchors in a scene where a mobile terminal is moving according to a second embodiment of the present disclosure.
FIG. 13 is an example of valid anchors and unnecessary anchors in a scene where a mobile terminal is not moving.
FIG. 14 is a flowchart, together with the flowchart shown in FIG. 10, showing details of the ranging communication process.
FIG. 15 is an example of valid anchors and unnecessary anchors in a scene where a mobile terminal is approaching a vehicle according to a third embodiment of the present disclosure.
FIG. 16 is an example of valid anchors and unnecessary anchors in a scene where a mobile terminal is moving away from a vehicle.
FIG. 17 is a flowchart, together with the flowchart shown in FIG. 10, showing details of the ranging communication process.
FIG. 18 is an example of a terminal area set around a vehicle in a vehicle-mounted key system according to a fourth embodiment of the present disclosure.
FIG. 19 is a ranging method performed when a mobile terminal is in a remote area.
FIG. 20 is a ranging method performed when a mobile terminal is in an intermediate area.
FIG. 21 is a ranging method performed when a mobile terminal is in a nearby area.
FIG. 22 is a flowchart, together with the flowchart shown in FIG. 10, showing details of the ranging communication process.
FIG. 23 is a flowchart, together with a flowchart shown in FIG. 10, showing details of a ranging communication process according to a fifth embodiment of the present disclosure.
FIG. 24 is a flowchart, together with a flowchart shown in FIG. 10, showing details of a ranging communication process according to a sixth embodiment of the present disclosure.
FIG. 25 is a flowchart, together with a flowchart shown in FIG. 10, showing details of a ranging communication process according to a seventh embodiment of the present disclosure.
FIG. 26 is a flowchart showing details of a ranging communication process when multiple mobile terminals perform the ranging communication.
FIG. 27 is a diagram showing details of a ranging when multiple mobile terminals perform the ranging.
FIG. 28 is a diagram showing a configuration of terminal areas in modification example 1.
FIG. 29 is a diagram showing an example of correlation information in modification example 1.
FIG. 30 is a diagram showing an arrangement of anchors in a vehicle-mounted key system according to modification example 2.

### DESCRIPTION OF EMBODIMENTS

The following will describe embodiments of the present disclosure with reference to accompanying drawings. In the following description, the same reference symbols are assigned to corresponding components in each embodiment in order to avoid repetitive descriptions. In each of the embodiments, when only a part of the configuration is described, the remaining parts of the configuration may adopt corresponding parts of other embodiments. Further, not only the combinations of the configurations explicitly shown in the description of the respective embodiments, but also the configurations of multiple embodiments can be partially combined even when they are not explicitly shown as long as there is no difficulty in the combination in particular.

### (First Embodiment)

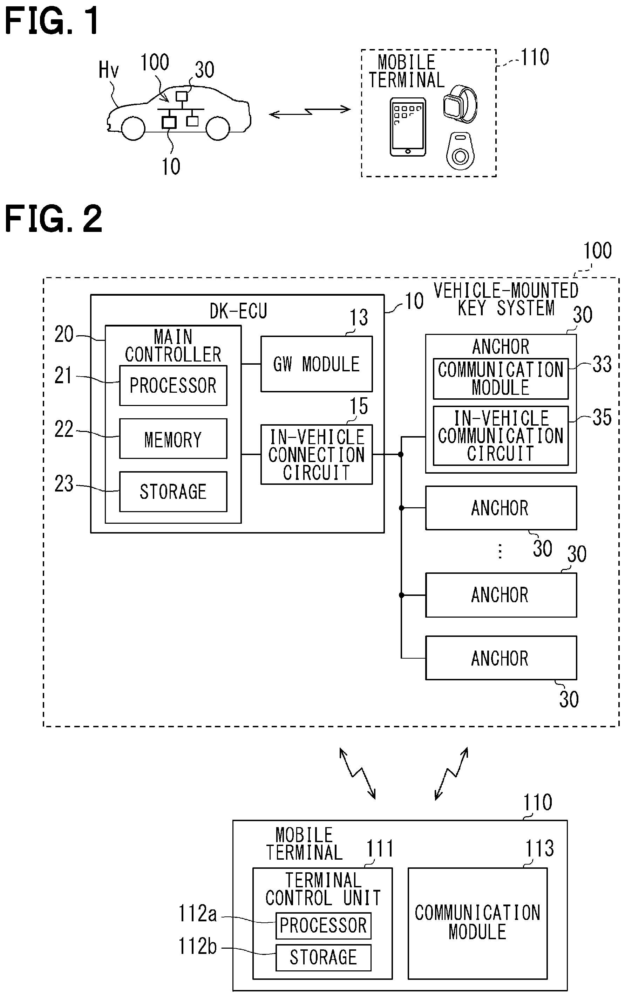

As shown in FIG. 1, a vehicle-mounted key system 100 according to a first embodiment of the present disclosure is mounted on a moving object, such as a vehicle Hv. The vehicle-mounted key system 100 provides security-related benefits to a user of the vehicle Hv. The vehicle-mounted key system 100 can provide the user with functions related to locking and unlocking of doors of the vehicle Hv, functions related to starting a traveling purpose engine, and functions related to theft prevention, or the like.

### (Overall Configuration)

As shown in FIG. 1 and FIG. 2, the vehicle-mounted key system 100 includes a digital key ECU (hereinafter referred to as DK-ECU) 10 and multiple anchors 30. ECU is an abbreviation for Electronic Control Unit. DK is an abbreviation for Digital Key. The vehicle-mounted key system 100 is capable of communicating with a mobile terminal 110 carried by a user of the vehicle Hv. The mobile terminal 110 corresponds to a key device that functions as a key of the vehicle Hv.

The DK-ECU 10, the anchor 30, and the mobile terminal 110 are configured to enable execution of short-range communication. The short-range communication refers to a communication that conforms to a predetermined short-range wireless communication standard, with an effective communication range of 1 meter to 30 meters. The maximum communication range may be approximately 100 meters. Standard such as Bluetooth Low Energy (hereinafter referred to as Bluetooth LE) can be used for short-range communication. In the following description, the communication conforming to the Bluetooth LE standard may be referred to as LE communication. The short-range communication may also be referred to as SR (Short Range) communication. For the short-range communication, multiple channels belonging to the 2.4 GHz band are used. The wireless signal exchanged between the wireless modules, which will be described later, include a code indicating a source of transmission or a destination of transmission. The source and destination of wireless signal are represented, for example, by a device ID.

### (Configuration of mobile terminal)

As shown in FIG. 1 to FIG. 3, the mobile terminal 110 is a key device equipped with short-range communication function. A variety of key devices, which can be carried by the user of the vehicle Hv, may be used as the mobile terminal 110. The mobile terminal 110 may be provided by a smartphone, a wearable device, a key fob, or the like. The wearable device may have various forms, such as wristband, watch, ring, glasses, and earphone. The key fob may be a dedicated device (such as a smart key) that serves as the electronic key of the vehicle Hv. The key fob is one of the accessories provided with the vehicle Hv, which is transferred to the owner when the vehicle is purchased. The smart key may have various shapes, such as a flattened rectangular cuboid shape, a flattened ellipsoid shape, or a card shape.

The mobile terminal 110 includes a terminal control unit 111 and a communication module 113. The terminal control unit 111 is a processing circuit that controls an operation of the mobile terminal 110. The terminal control unit 111 includes a processor 112a, a memory, a storage 112b, an input/output circuit. The terminal control unit 111 functions as a computer that performs various processes for operating the mobile terminal 110.

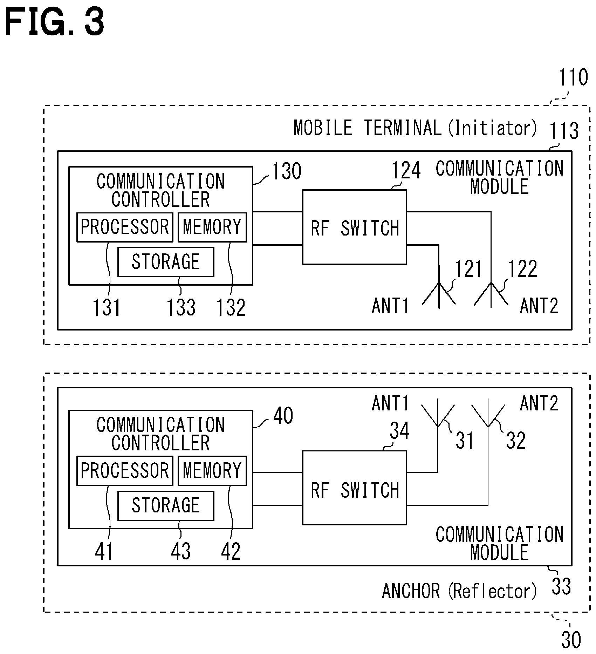

The communication module 113 is a wireless communication module installed in the mobile terminal 110. The communication module 113 is capable of performing LE communication. The configuration and functions of the communication module 113 may be the same as those of a communication module 33 included in the anchor 30, which will be described later. The communication module 113 includes two-axis antennas 121 and 122, an RF switch 124, and a communication controller 130 (see FIG. 3).

The antennas 121 and 122 are antenna elements that transmit and receive radio waves in the aforementioned frequency band (2.4 GHz band) used for LE communication. The antennas 121 and 122 correspond to terminal antennas. The antennas 121 and 122 are electrically connected to the RF switch 124.

The RF switch 124 is a signal processing circuit that performs signal processing related to the transmission and reception of wireless signals. The RF switch 124 includes a modulation circuit, a demodulation circuit, a frequency conversion circuit, an amplification circuit, a local oscillator, or the like. The RF switch 124 performs output process of signals toward the antennas 121 and 122, and performs input processes of signals received by the antennas 121 and 122. The RF switch 124 can switch the use antenna between the two-axis antennas 121 and 122. The RF switch 124 is connected to the communication controller 130 in a communicable manner. The RF switch 124 demodulates the signals received by the antennas 121 and 122 and provides the demodulated signals to the communication controller 130. The RF switch 124 modulates the transmission data input from the communication controller 130 and transmits the modulated transmission data as radio waves from the antennas 121 and 122.

The communication controller 130 includes a processor 131, a memory 132, a storage 133, an input/output circuit, or the like. The communication controller 130 is implemented by a microcomputer or microcontroller, which controls the RF switch 124. At least one of the storage 112b of the terminal control unit 111 or the storage 133 of the communication controller 130 stores the device ID of the mobile terminal 110, and key code (encryption key) used for wireless authentication process with the DK-ECU 10. At least one of the storage 112b or the storage 133 installs an application software (digital key application) that causes the mobile terminal 110 to function as a key of the vehicle Hv. The digital key application is a program for secure communication with the DK-ECU 10, as well as for responding to inquiries and requests from the DK-ECU 10.

The communication module 113 transmits an advertising signal at a predetermined transmission interval when a communication connection is not established between the mobile terminal 110 and the DK-ECU 10. An advertising signal is a radio signal used to notify other devices of presence of own device. The communication module 113 executes a communication connection process with the DK-ECU 10 in response to receiving a connection request from the DK-ECU 10. In response to the advertising signal from the mobile terminal 110, the vehicle-mounted key system 100 (DK-ECU 10) transmits a connection request, thereby establishing a communication connection between the mobile terminal 110 and the DK-ECU 10. Based on the establishment of communication connection with the DK-ECU 10, the communication module 113 executes an authentication process via short-range communication (hereinafter referred to as wireless authentication process). The wireless authentication process is executed, for example, using a challenge-response method.

### (DK-ECU Configuration)

The DK-ECU 10 is connected to the in-vehicle network, which is established as a communication network within the vehicle Hv. The standards for in-vehicle networks include Controller Area Network (CAN: registered trademark), Ethernet (registered trademark), and FlexRay (registered trademark). The DK-ECU 10 is connected to each of the multiple anchors 30 either via an in-vehicle network or via a dedicated communication cable.

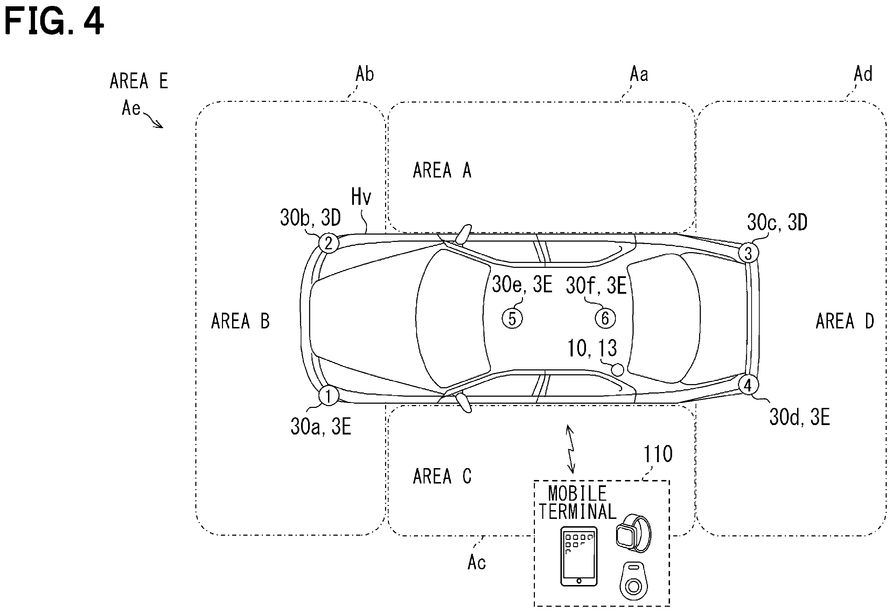

The DK-ECU 10 may be mounted at a proper portion of the vehicle Hv. As an example, the DK-ECU 10 may be mounted on a left C-pillar of the vehicle Hv (see FIG. 4). The C-pillar is the third pillar from the front among the pillars of the vehicle. The DK-ECU 10 may be arranged in an instrument panel, on an overhead console, on the right C-pillar, or under the driver seat, or the like.

The DK-ECU 10 controls multiple anchors 30. The DK-ECU 10 functions as a position determination device that determines the position of the mobile terminal 110 (hereinafter referred to as a terminal position) in cooperation with multiple anchors 30. The terminal position refers to a relative position of the mobile terminal 110 with respect to the vehicle Hv. Since the mobile terminal 110 is linked to the user, determining the terminal position is equivalent to determining a position of the user.

The DK-ECU 10 includes a gateway module 13, an in-vehicle connection circuit 15, and a main controller 20.

The gateway module 13 is a wireless module included in the DK-ECU 10. The gateway module 13 is capable of performing, at least, LE communication. The configuration and functions of the gateway module 13 may be the same as those of the communication modules 33 and 113. The gateway module 13 is supplied with power from the vehicle battery even when the power supply for traveling purpose is turned off. The gateway module 13 uses power supplied from the vehicle battery to keep a standby mode, either continuously or intermittently, even while the vehicle Hv is in parked state. The gateway module 13 periodically performs scans and attempts to connect with the mobile terminal 110.

The in-vehicle connection circuit 15 is a signal processing circuit that performs signal processing between the main controller 20 and the multiple anchors 30. The in-vehicle connection circuit 15 includes a PHY chip and a cable connector, which conform to the communication method of anchors 30. The in-vehicle connection circuit 15 converts a signal input from the anchor 30 into a format such that the main controller 20 can receive. Then the in-vehicle connection circuit 15 outputs the received signal to the main controller 20. The in-vehicle connection circuit 15 performs a predetermined signal processing on the data input from the main controller 20, and then outputs the data to the anchor 30.

The main controller 20 is a processing circuit that controls an operation of the DK-ECU 10. The main controller 20 includes a processor 21, a memory 22, a storage 23, an input/output circuit, or the like. The main controller 20 may be implemented by a computer that performs various processes related to determining the terminal position. The main controller 20 maintains a deactivated state while the gateway module 13 receives no signal transmitted from the mobile terminal 110. The main controller 20 is activated based on the establishment of communication between the gateway module 13 and the mobile terminal 110.

### (Anchor Structure)

The anchor 30 is used to determine the terminal position. The anchor 30 performs LE communication with the mobile terminal 110 based on an instruction from the DK-ECU 10. The anchor 30 includes a communication module 33 and an in-vehicle communication circuit 35.

The communication module 33 is a wireless module included in the anchor 30. The communication module 33 is capable of performing LE communication. The configuration and functions of the communication module 33 may be the same as those of the communication module 113 and the gateway module 13 described above. The communication module 33 includes two-axis antennas 31 and 32, an RF switch 34, and a communication controller 40 (see FIG. 3).

The antennas 31, 32, the RF switch 34, and the communication controller 40 are substantially same as the antennas 121, 122, the RF switch 124, and the communication controller 130 of the communication module 113. The antennas 31 and 32 are also referred to as anchor antennas. The communication controller 40 includes a processor 41, a memory 42, a storage 43, an input/output circuit, or the like. The communication controller 40 is implemented by a microcomputer or microcontroller that controls the RF switch 34.

The in-vehicle communication circuit 35 is a signal processing circuit that performs signal processing between the anchor 30 and the main controller 20. The in-vehicle communication circuit 35 converts the signal input from the DK-ECU 10 into a format that the communication module 33 can receive and then outputs the received signal to the communication module 33. The in-vehicle communication circuit 35 performs a predetermined signal processing on the data input from the communication module 33, and then outputs the processed data to the DK-ECU 10.

The anchor 30 operates according to an instruction from the DK-ECU 10. The anchor 30 is activated in response to an instruction from the DK-ECU 10 and performs the ranging communication to be described later. A communication enabled state of the anchor 30 may include an active state or a wake state. The anchor 30 stops operation by itself or in response to an instruction from the DK-ECU 10, after performing the ranging communication. In the state where the operation is stopped, power consumption can be reduced. The operation stopped state includes a power saving state, a power saving mode, a sleep state, or a disabled state. In these states, the power may be turned off, or some functions may be stopped or disabled. Activating the anchor 30 indicates transitioning the state from above-described power saving state to the communication enabled state.

### (Arrangement of anchors on the vehicle>

The vehicle Hv is equipped with multiple anchors 30a to 30f (see FIG. 4). The number of anchors 30 mounted on the vehicle Hv and the arrangement of anchors 30 may be changed as appropriate corresponding to vehicle type. The configuration, function, and performance of the multiple anchors 30a to 30f are substantially identical to one another. Of the multiple anchors 30, anchors 30a to 30d are outdoor anchors or external anchors, and are attached to an outer surface of the vehicle Hv. Of the multiple anchors, anchors 30e and 30f are indoor anchors or inside anchors, and are installed inside the vehicle Hv.

The anchor 30a (anchor with circled 1 in FIG. 4) is arranged at the left front corner of vehicle Hv. Alternatively, the anchor 30a may be arranged near the left front wheel, at the left end of the front bumper, or on the left side mirror. The anchor 30a may be referred to as a left front anchor or a first anchor.

The anchor 30b (anchor with circled 2 in FIG. 4) is arranged at the right front corner of vehicle Hv. Alternatively, the anchor 30b may be arranged near the right front wheel, at the right end of the front bumper, or on the right side mirror. The anchors30b may be referred to as a right front anchor or a second anchor.

The anchor 30c (anchor with circled 3 in FIG. 4) is arranged at the right rear corner of vehicle Hv. Alternatively, the anchor 30c may be arranged near the right rear wheel or at the right end of the rear bumper. The anchor 30c may be referred to as a right rear anchor or a third anchor.

The anchor 30d (anchor with circled 4 in FIG. 4) is arranged at the left rear corner of vehicle Hv. Alternatively, the anchor 30d may be arranged near the left rear wheel or at the left end of the rear bumper. The anchor 30d may be referred to as a left rear anchor or a fourth anchor.

The anchor 30e (anchor with circled 5 in FIG. 4) and the anchor 30f (anchor with circled 6 in FIG. 4) are arranged at different positions along the front-rear direction in the vehicle. The anchor 30e is arranged on front side of the vehicle compared with the anchor 30f. The anchor 30e may be arranged on the instrument panel, the upper end of windshield, or on the center console. The anchor 30e may be referred to as an inside front anchor or a fifth anchor. The anchor 30f is arranged on rear side of the vehicle compared with the anchor 30e. The anchor 30f may be arranged on a center portion of the rear seat, the ceiling above the rear seat, or in the trunk. The anchor 30f may be referred to as an inside rear anchor or a sixth anchor.

### (Registration of mobile terminal in the vehicle-mounted key system)

The following will describe an example of an owner device registration process for registering (pairing) the mobile terminal 110 as an owner device in the vehicle-mounted key system 100.

In the owner device registration process, when the mobile terminal 110 is provided by a communication terminal such as a smartphone, the user performs biometric authentication or enters a passcode on the mobile terminal 110. This allows the owner device registration process to confirm that the mobile terminal 110 is operated by the authenticated user.

The user uses the mobile terminal 110 to request a management server to start the owner device registration process. In response to this request, the management server generates a password. The generated password is distributed to the mobile terminal 110 and the vehicle-mounted key system 100 via wireless communication.

In the vehicle-mounted key system 100, when a main switch of the vehicle Hv is turned on, a button to start pairing between the owner device and the vehicle-mounted key system 100 may be displayed on a multimedia screen located inside the vehicle. The pairing process begins when the user presses the pairing start button displayed on the screen. In this case, the vehicle-mounted key system 100 may authenticate the user by instructing the user to hold the smart key having the short-range wireless communication function, such as NFC, close to the main switch. Alternatively, the user authentication may be performed by requesting the user to enter a passcode on the multimedia screen to indicate that the user is an authenticated user. The pairing start button may be displayed on a display 95 of the mobile terminal 110, instead of displaying on the multimedia screen arranged inside the vehicle.

When the pairing start button is operated by the user, an advertising signal is sent from the slave device (DK-ECU 10 or mobile terminal 110) to the central device (mobile terminal 110 or DK-ECU 10) in LE communication. In LE communication, the central device receives advertising signals from the slave device. Then, based on the password distributed by the management server, the central device verifies that the communication partner is legitimate and sends a connection request as a response to the advertising signal. In response to the slave device receiving the connection request from the central device, the LE communication connection is established between the central device and the slave device.

After the LE communication connection is established between the central device and the slave device, the central device and the slave device generate encryption keys for each other and exchange the encryption keys via the LE communication. After the authenticity of exchanged encryption key is verified on each side, the keys are stored in a storage medium such as respective storage devices. After pairing, the data signal of LE communication is encrypted using the exchanged encryption key. This ensures the security of LE communication between the DK-ECU 10 and the mobile terminal 110.

Next, the DK-ECU 10 determines whether the mobile terminal 110 supports LE-CS ranging (to be described later). When the DK-ECU 10 determines that the mobile terminal 110 supports LE-CS ranging, the DK-ECU 10 correlates the device ID of the mobile terminal 110 to the CS support flag, registers and stores the correlated information. The determination of whether the mobile terminal 110 supports LE-CS ranging may be performed each time the DK-ECU 10 and the mobile terminal 110 begin LE communication, instead of when the mobile terminal 110 is registered as the owner device.

The owner device registration process is completed when the management server is notified that the mobile terminal 110 has been registered as the owner device of the vehicle-mounted key system 100. After the owner device registration process is completed, the slave device (DK-ECU 10 or mobile terminal 110) in LE communication starts transmission of advertising signals. In LE communication, the central device (mobile terminal 110 or DK-ECU 10) starts scanning for the corresponding advertising signal.

### (Details of ranging communication)

When the mobile terminal 110 is registered as the owner device of the vehicle-mounted key system 100, the relative position of the mobile terminal 110 to the vehicle Hv is determined when the mobile terminal 110 approaches the vehicle Hv. In determining the position of mobile terminal, the vehicle-mounted key system 100 and the mobile terminal 110 perform ranging communication to measure the distance between each anchor 30 and the mobile terminal 110. The vehicle-mounted key system 100 and the mobile terminal 110 may combine different ranging methods depending on the scene.

The anchor 30 and the mobile terminal 110 may perform ranging using the received signal strength indicator/indication (RSSI) of communicated signals (hereinafter referred to as RSSI ranging) in LE communication. The anchor 30 and the mobile terminal 110 may perform channel sounding ranging (hereinafter referred to as LE-CS ranging) using LE communication. The LE-CS ranging includes ranging using RTT (Round Trip Time) packets (hereinafter referred to as RTT ranging) and phase difference ranging using continuous waves (hereinafter referred to as CW signals) having predetermined waveform.

The details of ranging methods will be explained with reference to FIG.3, FIG. 5 to FIG. 7, together with FIG. 1 and FIG. 2. In each ranging communication, for example, the mobile terminal 110 corresponds to the master (central) device of the communication, that is, an initiator. The anchor 30 corresponds to the slave device of the communication, that is, reflector. The master-slave relationship in each ranging communication may be reversed.

### (RSSI ranging)

As mentioned above, RSSI ranging is a ranging method performed based on RSSI, which is a value related to the radio wave strength of LE communication. When the RF switch 34 of the anchor 30 receives LE communication signal transmitted from the mobile terminal 110, the RF switch measures the received signal strength. The RF switch 34 calculates RSSI, which is a measured value of the received signal strength, and outputs the calculated RSSI value to the communication controller 40.

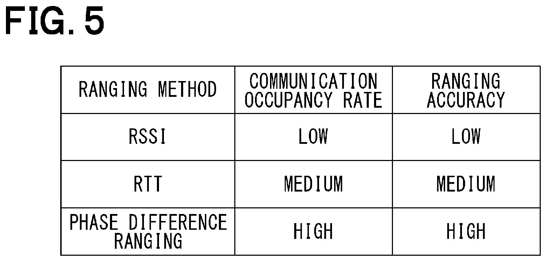

The RSSI ranging is a ranging method that uses signals used in data communication. Therefore, RSSI ranging can keep the communication occupancy rate of LE communication at a lower rate compared to LE-CS ranging (see FIG. 5). The communication occupancy rate is a value that indicates a proportion of the communication duration during which signals are actually being sent and received (communication occupancy duration). The accuracy of RSSI ranging is lower compared to that of LE-CS ranging.

### (LE-CS ranging (mode 1): RTT ranging)

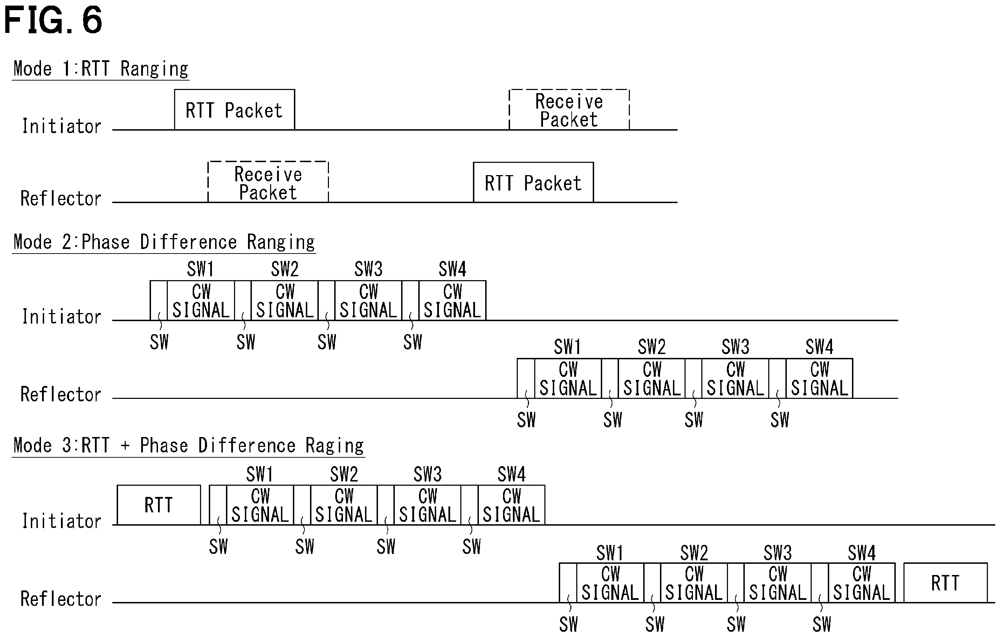

RTT ranging is a mode 1 of LE-CS ranging (see FIG. 6). The mobile terminal 110 and the anchor 30 send and receive RTT packets to and from one another. Each communication controller 40, 130 measures the round-trip time from the transmission time of RTT packet until reception of a response signal, and calculates the distance based on the round-trip time.

The mobile terminal 110 (initiator) sends an RTT packet to the anchor 30 (reflector). The anchor 30 records the time stamp indicating reception time of RTT packet. Similarly, the anchor 30 sends an RTT packet to the mobile terminal 110. The mobile terminal 110 records the time stamp indicating reception time of RTT packet. The radio wave propagation duration is calculated from the timestamps recorded when RTT packets are sent and received. Then, by converting the propagation duration into distance, the distance between the mobile terminal 110 and the anchor 30 is calculated. In order to avoid radio interference, the anchor 30 changes the frequency used to send and receive RTT packets.

The RTT ranging requires the transmission and reception of RTT packets, thus RTT ranging requires more LE communication resource than RSSI ranging (see FIG. 5). The RTT ranging can keep the communication occupancy rate of LE communication lower than that of phase difference ranging, which will be discussed later. The accuracy of RTT ranging is higher than that of RSSI ranging, but the accuracy of RTT ranging is lower than that of phase difference ranging.

### (LE-CS ranging (mode 2): phase difference ranging)

Phase difference ranging is mode 2 of LE-CS ranging (see FIG. 6). The mobile terminal 110 and the anchor 30 transmit unmodulated CW signals to each other and measure the received phases. The mobile terminal 110 and the anchor 30 increase the frequency of the CW signals in increments of 1 MHz or 2 MHz from 2400 MHz to 2480 MHz. When the frequency of CW signal is changed, the phase measured at the receiving end also changes. Based on the difference in reception phase corresponding to different frequencies, the distance between the mobile terminal 110 and the anchor 30 is calculated.

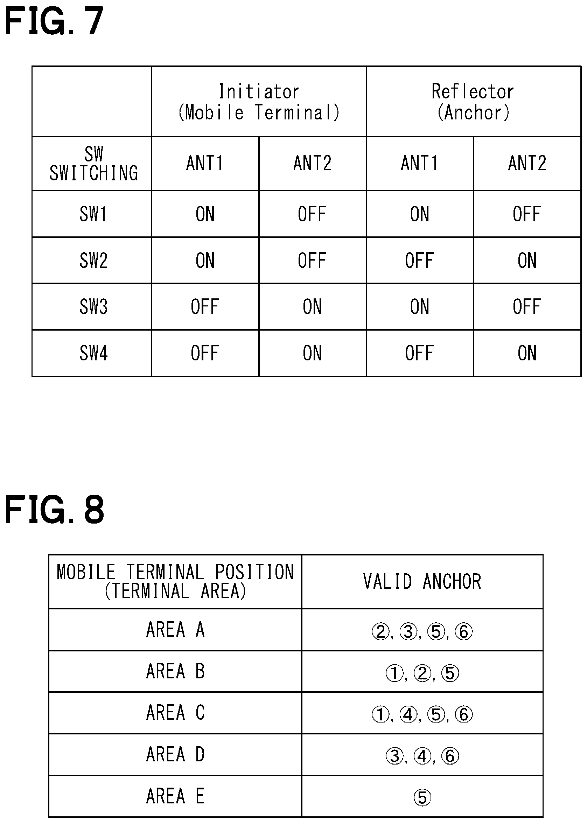

The mobile terminal 110 and the anchor 30 switch antenna paths (communication paths) used in communication corresponding to a single frequency, and measure the received phase. Specifically, the RF switch 124 of the mobile terminal 110 sequentially switches the two-axis antennas 121 and 122 on and off (see FIG. 7). Similarly, the RF switch 34 of the anchor 30 sequentially switches the two-axis antennas 31 and 32 on and off (see FIG. 7). Phase difference ranging uses four antenna paths (see FIG. 6 and FIG. 7, SW1 to SW4).

The phase difference ranging requires continuous transmission and reception of CW signals. Thus, phase difference ranging requires higher LE communication occupancy rate than those of RSSI ranging and RTT ranging (see FIG. 5). The accuracy of phase difference ranging can be ensured to be higher than those of RSSI ranging and RTT ranging.

### (LE-CS ranging (mode 3): RTT + phase difference ranging)

LE-CS ranging includes a combination of phase difference ranging and RTT ranging within a single frequency (see FIG. 6, Mode 3). The mobile terminal 110 and the anchor 30 transmit RTT packets and CW signals in sequence. The LE-CS ranging method of Mode 3 can ensure further improved ranging accuracy. Both RTT packets and CW signals need to be transmitted and received in Mode 3, thus the communication occupancy rate of LE-CS ranging in Mode 3 will be higher than those in Mode 1 and Mode 2. The detailed principle of phase difference ranging using LE communication will be explained later in Details of LE-CS ranging/phase difference ranging.

### (Condition for starting and ending LE-CS ranging)

The following will describe start and end conditions for LE-CS ranging between the mobile terminal 110 and the vehicle-mounted key system 100.

The LE-CS ranging may be initiated when the received signal strength in the LE communication becomes equal to or larger than a predetermined strength threshold, or when the distance between the positions detected by GPS receivers falls equal to or shorter than a distance threshold. When any of the above-described conditions for starting LE-CS ranging communication is satisfied, the DK-ECU 10 can transmit a request to start LE-CS ranging to the anchor 30. The anchor 30 transitions from sleep state to activated state in response to a request to start LE-CS ranging. Then, the anchor 30 can transmit signals for LE-CS ranging. The anchor 30 remains the sleep state while the LE-CS ranging is not being performed.

The LE-CS ranging communication may be terminated, for example, when the power of the mobile terminal 110 is turned off and the LE communication is disconnected, or when the received signal strength of LE signal decreases equal to or lower than a predetermined strength threshold. The strength threshold used when terminating LE-CS ranging may be the same as or different from the strength threshold used to initiate the LE-CS ranging. The LE-CS ranging may be terminated when no action is taken on the vehicle for a predetermined period of time after the LE-CS ranging has started. The LE-CS ranging may be terminated when the user gets into the vehicle Hv and turns on the start switch of the vehicle. When any of the above-described conditions for terminating LE-CS ranging communication is satisfied, the DK-ECU 10 can transmit a request to terminate LE-CS ranging to the anchor 30. When the anchor 30 terminates LE-CS ranging based on the termination request and does not receive a new start request of LE-CS ranging within a predetermined period, the anchor may enter the sleep state. When the communication connection with the mobile terminal 110 is disconnected, the DK-ECU 10 and the anchor 30, respectively, return to the same state as before the mobile terminal 110 approached the vehicle.

When the LE-CS ranging is terminated in response to the user turning on the start switch, the LE-CS ranging may be started again (restarted) in response to the opening and closing of the door of vehicle Hv. This enables detection of the position for the mobile terminal 110 via LE-CS ranging communication when the mobile terminal 110 is taken outside the vehicle while the vehicle Hv is temporarily stopped with the start switch remaining on state.

### (Problem and countermeasures in LE-CS ranging)

As explained above, the vehicle-mounted key system 100 can determine the terminal position with higher accuracy using LE-CS ranging. In the LE-CS ranging, the transmission and reception duration of radio waves is longer and the communication occupancy rate is higher compared to RSSI ranging, thereby easily causing radio interference. Suppose that multiple anchors 30 communicate with the mobile terminals 110 and the vehicle-mounted key system 100 communicates with multiple mobile terminals 110. This situation may easily incur radio interference.

To solve the above-described problem, the vehicle-mounted key system 100 limits the number of anchors 30 used for LE-CS ranging based on the area where the mobile terminal 110 (user) is positioned (hereinafter referred to as the terminal area, see FIG. 4 and FIG. 8). This configuration can decrease the transmission and reception duration of radio waves at a minimum level even when multiple mobile terminals 110 are present, thereby suppressing deterioration in responsiveness.

### (Processing circuit configuration for ranging communication)

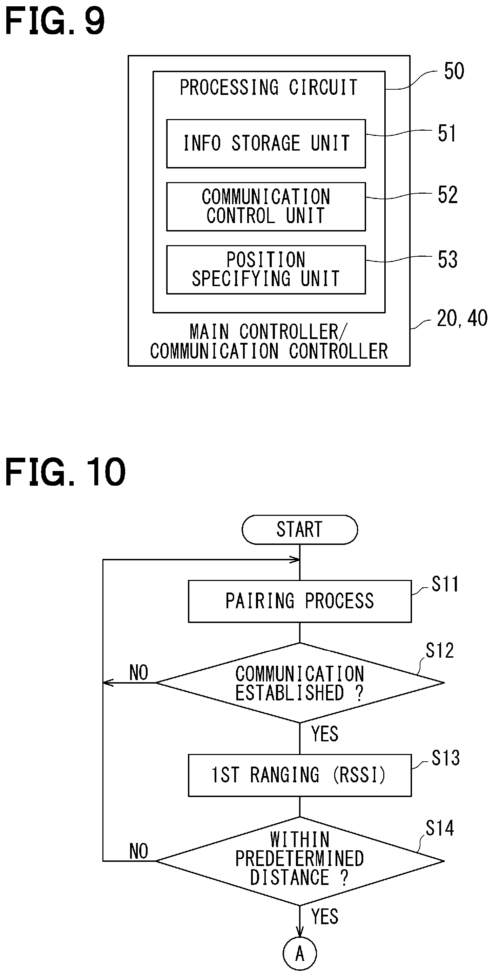

In the following explanation, the main controller 20 of the DK-ECU 10 and the communication controller 40 of the anchor 30 will be referred to as a processing circuit 50 of the vehicle-mounted key system 100 for convenience (see FIG. 9). The processing circuit 50 executes the position determination method according to the present disclosure. The processing circuit 50 includes, as functional blocks, an information storage unit 51, a communication control unit 52, and a position specifying unit 53. The functions of the information storage unit 51, the communication control unit 52, and the position specifying unit 53 may be implemented by either the main controller 20 alone or the communication controller 40 alone, or by the cooperation of the main controller 20 and the communication controller 40.

The information storage unit 51 stores correlation information (see FIG. 8) that correlates the terminal area to the valid anchor 3E, which will be described later. The terminal area is set around the vehicle Hv. For example, five terminal areas are set around the vehicle Hv (see FIG. 4). A driver seat area Aa (see area A in FIG. 4) is a terminal area defined to face the driver seat of vehicle Hv. A passenger seat area Ac (see area C in FIG. 4) is a terminal area defined to face the passenger seat of vehicle Hv. A front area Ab (see area B in FIG. 4) is a terminal area defined to face the front portion of vehicle Hv. A front area Ab is adjacent to the driver seat area Aa and the passenger seat area Ac on front side of the driver seat area Aa and the passenger seat area Ac. A rear area Ad (see area D in FIG. 4) is a terminal area defined to face the rear portion of vehicle Hv. The rear area Ad is adjacent to the driver seat area Aa and the passenger seat area Ac on rear side of the driver seat area Aa and the passenger seat area Ac. An outer area Ae (see Area E in FIG. 4) is a terminal area defined on outer side of the driver seat area Aa, the front area Ab, the passenger seat area Ac, and the rear area Ad.

In the correlation information, a valid anchor 3E is defined corresponding to each terminal area. The valid anchor is an anchor that is in effect. The valid anchor 3E is one of the multiple anchors 30 that is allowed to perform the LE-CS ranging. Of the multiple anchors 30, remaining anchors except the valid anchor 3E are referred to as unnecessary anchor 3D or invalid anchors (see FIG. 4). For the unnecessary anchor 3D, LE-CS ranging is restricted.

For the driver seat area Aa (area A), anchors 30b, 30c, 30e, and 30f (see FIG. 4, anchors with circled 2, 3, 5, and 6) are defined as valid anchors 3E. For the driver seat area Aa, anchors 30a and 30d (see FIG. 4, anchors with circled 1 and 4) are defined as unnecessary anchors 3D.

For the front area Ab (area B), anchors 30a, 30b, and 30e (see FIG. 4, anchors with circled 1, 2, and 5) are defined as valid anchors 3E. For the front area Ab, anchors 30c, 30d, and 30f (see FIG. 4, anchors with circled 3, 4, and 6) are defined as unnecessary anchors 3D.

For the passenger seat area Ac (area C), anchors 30a, 30f, 30e, and 30f (see FIG. 4, anchors with circled 1, 4 to 6) are defined as valid anchors 3E. For the passenger seat area Ac, anchors 30b and 30c (see FIG. 4, anchors with circled 2 and 3) are defined as unnecessary anchors 3D.

For the rear area Ad (area D), anchors 30c, 30d, and 30f (see FIG. 4, anchors with circled 3, 4, and 6) are defined as valid anchors 3E. For the rear area Ad, anchors 30a, 30b, and 30e (see FIG. 4, anchors with circled 1, 2, and 5) are defined as unnecessary anchors 3D.

For the outer area Ae (area E), anchor 30e (see FIG. 4, anchor with circled 5) is defined as the valid anchor 3E. For the outer area Ae, remaining anchors 30a to 30d, 30e (see FIG. 4, anchors circled with 1 to 4, and 6) are defined as unnecessary anchors 3D.

Based on information indicating the position of the mobile terminal 110, the communication control unit 52 determines which anchor is valid anchor (3E) and which is invalid anchor (3D) among the multiple anchors 30. The communication control unit 52 identifies the terminal area where the mobile terminal 110 is located among the multiple preset terminal areas, based on the ranging data obtained by RSSI ranging. The communication control unit 52 refers to the correlation information and determines, among the multiple anchors 30, the valid anchor 3E and invalid anchor 3D corresponding to the specified terminal area. The valid anchor 3E acquires ranging data related to phase difference or time of flight (RTT) by performing LE-CS ranging in mode 1 to mode 3. The communication control unit 52 stops transmission of the signal for LE-CS ranging from the unnecessary anchor 3D as a process to restrict the operation of unnecessary anchor 3D. This configuration can stop the transmission and reception of RTT packets and CW signals in the unnecessary anchor 3D. As a result, the unnecessary anchor 3D does not acquire ranging data.

The position specifying unit 53 determines the position of the mobile terminal 110 based on the ranging data from the valid anchor 3E. The valid anchor 3E is determined by the communication control unit 52. When the ranging communication continues after the position specifying unit 53 has specified the position of the mobile terminal 110, the communication control unit 52 may determine the terminal area and valid anchor 3E again based on the latest ranging data specified by the position specifying unit 53. The position specifying unit 53 specifies the position of the mobile terminal 110 again based on the ranging data of the reset valid anchor 3E.

### (Details of ranging communication process)

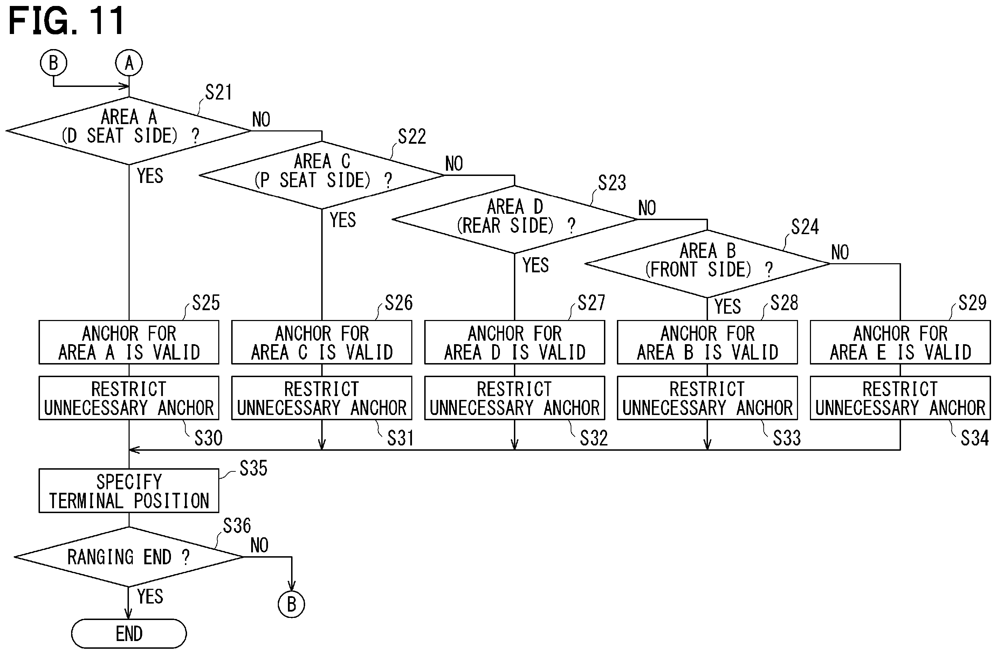

The following will describe details of ranging communication process performed by the vehicle-mounted key system 100 as described above, with reference to FIG. 10 and FIG. 11, together with FIG. 1 to FIG. 9. The ranging communication process is started by the processing circuit 50 of the vehicle-mounted key system 100 in response to reception of a signal from the mobile terminal 110. The ranging communication process may be started when communication with the mobile terminal 110 is established, or when an advertising signal is received.

In S11 of the ranging communication process (see FIG. 10), pairing process between the DK-ECU 10 and the mobile terminal 110 is performed using LE communication. In S12, the process determines whether the pairing process started in S11 has been completed and whether LE communication between the vehicle-mounted key system 100 and the mobile terminal 110 has been established. In response to determining that LE communication has not yet established (S12: NO), the system waits for LE communication to be established. In response to determining that establishing of communication fails and a timeout occurs, the ranging communication process is terminated.

In response to determining that LE communication is established (S12: YES), the processing circuit 50 performs RSSI ranging using LE communication as the first ranging in S13. The processing circuit 50 acquires terminal position information of the mobile terminal 110 by RSSI ranging. Based on the terminal position information acquired in S13, the processing circuit 50 determines in S14 whether the mobile terminal 110 is located within a predetermined distance from the vehicle Hv. The predetermined distance used in S14 corresponds to the distance to an outer edge of the outer area Ae. In response to determining that the mobile terminal 110 is not positioned within the predetermined distance (S14: NO), the processing circuit 50 repeats the process in S11 to S14 and waits for the mobile terminal 110 to enter an area within the predetermined distance.

When the mobile terminal 110 moves to an area within the predetermined distance (S14: YES), the communication control unit 52 specifies the terminal area where the mobile terminal 110 is located in S21 to S24 (see FIG. 11). As an example, the communication control unit 52 specifies the terminal area where the mobile terminal 110 is located based on the RSSI ranging result. As another example, the communication control unit 52 may activate all anchors 30 for starting LE-CS ranging. The communication control unit 52 specifies the area where the mobile terminal 110 is located by LE-CS ranging using all anchors 30.

In S21, the communication control unit 52 determines whether the mobile terminal 110 is located in the driver seat area Aa (area A). When the mobile terminal 110 is not located in the driver seat area Aa (S21: NO), the communication control unit 52 determines in S22 whether the mobile terminal 110 is located in the passenger seat area Ac (area C). When the mobile terminal 110 is not located in the passenger seat area Ac (S22: NO), the communication control unit 52 determines in S23 whether the mobile terminal 110 is located in the rear area Ad (area D). When the mobile terminal 110 is not located in the rear area Ad (S23: NO), the communication control unit 52 determines in S24 whether the mobile terminal 110 is located in the front area Ab (area B).

In S25 to S29 each, the communication control unit 52 determines the valid anchor 3E among multiple anchors 30 based on information about the terminal area identified by RSSI ranging or LE-CS ranging. In each of S25 to S29, the valid anchor 3E corresponding to the terminal area is determined based on the correlation information stored in the information storage unit 51. in each of S30 to S34, the communication control unit 52 sets remaining anchor 30 other than the selected valid anchor 3E as unnecessary anchor 3D, thereby limiting LE-CS ranging in the unnecessary anchors 3D. When the communication control unit 52 has activated all anchors 30 for LE-CS ranging, the communication control unit sends stop requests to the anchors 30 that are set as unnecessary anchors 3D, thereby terminating the LE-CS ranging in unnecessary anchors.

When the mobile terminal 110 is located in the driver seat area Aa (S21: YES), the communication control unit 52 determines the valid anchor 3E corresponding to the driver seat area Aa in S25. In S30, the communication control unit 52 designates all anchors other than the valid anchor 3E corresponding to the driver seat area Aa as unnecessary anchors 3D, and stops the transmission and reception of ranging signals by the unnecessary anchors 3D.

When the mobile terminal 110 is located in the passenger seat area Ac (S22: YES), the communication control unit 52 determines the valid anchor 3E corresponding to the passenger seat area Ac in S26. In S31, the communication control unit 52 designates all anchors other than the valid anchor 3E corresponding to the passenger seat area Ac as unnecessary anchors 3D, and stops the transmission and reception of ranging signals by the unnecessary anchors 3D.

When the mobile terminal 110 is located in the rear area Ad (S23: YES), the communication control unit 52 determines the valid anchor 3E corresponding to the rear area Ad in S27. In S32, the communication control unit 52 designates all anchors other than the valid anchor 3E corresponding to the rear area Ad as unnecessary anchors 3D, and stops the transmission and reception of ranging signals by the unnecessary anchors 3D.

When the mobile terminal 110 is located in the front area Ab (S24: YES), the communication control unit 52 determines the valid anchor 3E corresponding to the front area Ab in S28. In S33, the communication control unit 52 designates all anchors other than the valid anchor 3E corresponding to the front area Ab as unnecessary anchors 3D, and stops the transmission and reception of ranging signals by the unnecessary anchors 3D.

When the mobile terminal 110 is not located in the front area Ab (S24: NO), that is, when the mobile terminal 110 is located in the outer area Ae, the communication control unit 52 determines the valid anchor 3E corresponding to the outer area Ae in S29. In S34, the communication control unit 52 designates all anchors other than the valid anchor 3E corresponding to the outer area Ae as unnecessary anchors 3D, and stops the transmission and reception of ranging signals by the unnecessary anchors 3D.

In S35, the position specifying unit 53 specifies the terminal position based on the ranging data of valid anchor 3E. In S36, the processing circuit 50 determines whether to terminate the ranging process. For example, the processing circuit 50 may be configured to determine termination of ranging process when no signal is received from the mobile terminal 110 (S36: YES). In this case, the ranging communication process is terminated.

When the reception of signals from the mobile terminal 110 continues, the processing circuit 50 decides to continue the ranging (S36: NO). In this case, the communication control unit 52 executes S21 to S24 again and specifies the terminal area where the mobile terminal 110 is located based on the terminal position information specified in S35. When the communication control unit 52 decides to continue ranging and executes S21 to S24 again, the communication control unit 52 may determine whether the currently specified terminal position has moved from the previously specified terminal area. When the communication control unit 52 determines that the user has moved across different terminal areas, the communication control unit 52 activates all anchors 30. The communication control unit 52 determines the terminal area where the user is located by LE-CS ranging using all anchors 30. Although movement across nearby terminal areas can be detected using only LE-CS ranging performed by the valid anchor 3E, the communication control unit activates all anchors 30 to perform more accurate detection of user movement across multiple terminal areas.

### (Summary of First Embodiment)

In the first embodiment described above, ranging data is acquired by execution of LE-CS ranging using the valid anchor 3E. For the unnecessary anchors 3D, execution of LE-CS ranging is restricted. The unnecessary anchors correspond to the anchors other than the valid anchor 3E. As described above, by limiting the anchor 30 that performs LE-CS ranging, the present embodiment can suppress radio wave interference.

By suppressing radio wave interference through the above-mentioned limitation on the number of operating anchors, in other words, by reducing the communication occupancy rate, deterioration in the responsiveness of the digital key system can be suppressed even in a case where multiple mobile terminals 110 are present around the vehicle Hv. By minimizing the duration required for transmitting and receiving radio waves, the present embodiment can improve responsiveness and reduce the dark current of the vehicle Hv.

In the first embodiment, the terminal area where the mobile terminal 110 is located is specified based on the value related to the radio wave strength of LE communication, that is, RSSI. Then, based on the terminal area information specified using RSSI, the valid anchor 3E is determined from the multiple anchors 30. Based on the above configuration, the approximate location of the mobile terminal 110 can be determined by RSSI ranging before the start of LE-CS ranging. As a result, it becomes possible to set unnecessary anchors 3D from the start of LE-CS ranging and restricts the communication caused by unnecessary anchor 3D.

In the first embodiment, the terminal area where the mobile terminal 110 is located is specified based on the ranging data. Then, based on the information of the terminal area specified using the ranging data, a valid anchor 3E is determined among the multiple anchors 30. By using the ranging data of LE-CS ranging, the terminal area where the mobile terminal 110 is located can be accurately determined. As a result, the valid anchor 3E and the unnecessary anchor 3D are set appropriately, ensuring ranging accuracy while restricting communication caused by the unnecessary anchor 3D.

In the first embodiment, correlation information that links the terminal area and the valid anchor 3E is stored in advance. Based on the correlation information, the valid anchor 3E corresponding to the terminal area can be determined. As described above, by determining the valid anchor 3E for each terminal area, the vehicle-mounted key system 100 can accurately determine the terminal position even if communication of unnecessary anchor 3D is restricted.

In the first embodiment, when the ranging communication continues after the terminal position is specified, the valid anchor 3E is determined again based on the latest ranging data. As described above, when the valid anchor 3E is updated based on the latest ranging data, the communication control unit 52 can appropriately set the valid anchor 3E and the unnecessary anchor 3D with a movement of the user who carries the mobile terminal 110.

In the first embodiment, as a process to restrict the operation of unnecessary anchor 3D, at least the transmission and reception of signals for LE-CS ranging performed by the unnecessary anchors 3D is stopped. In this way, the number of anchors 30 that perform ranging communication is reduced. Thus, it is possible to reduce the communication occupancy rate and, consequently, suppress radio interference.

In the first embodiment, the DK-ECU 10 corresponds to a position determination device or a control device. The processors 21 and 41 each corresponds to a processing unit. The vehicle-mounted key system 100 corresponds to a position determination system. The driver seat area Aa, the front area Ab, the passenger seat area Ac, the rear area Ad, and the outer area Ae each correspond to the terminal area.

### (Second Embodiment)

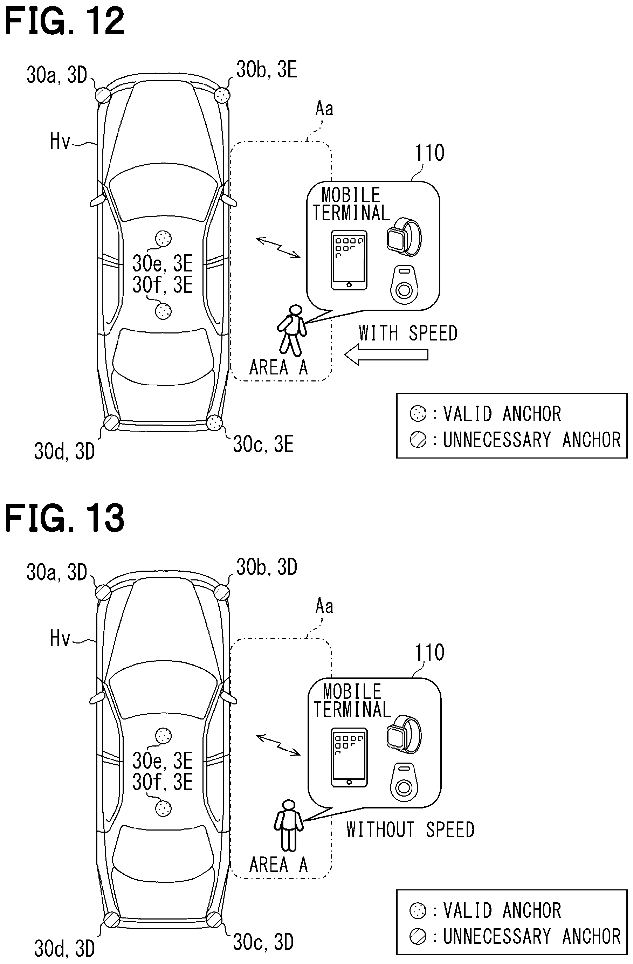

A second embodiment of the present disclosure illustrated in FIG. 12 to FIG. 14 is a modification of the first embodiment. In the second embodiment, the number of anchors is controlled using the relative speed of the mobile terminal 110 with respect to the vehicle Hv. In a case where the user carrying the mobile terminal 110 is within a predetermined distance from the vehicle Hv, the communication control unit 52 changes the number of valid anchors 3E depending on whether the mobile terminal 110 is moving or not.

When the mobile terminal 110 is moving at a certain speed (see FIG. 12), the communication control unit 52 determines the valid anchor 3E and unnecessary anchor 3D associated with each terminal area, similar to the first embodiment (see FIG. 8). When the mobile terminal 110 is not moving (see FIG. 13), in other words, when the user is not moving, the communication control unit 52 reduces the number of valid anchors 3E compared to a case where the mobile terminal is in a moving state. The communication control unit 52 may change the outer anchor from a valid anchor 3E to an unnecessary anchor 3D.

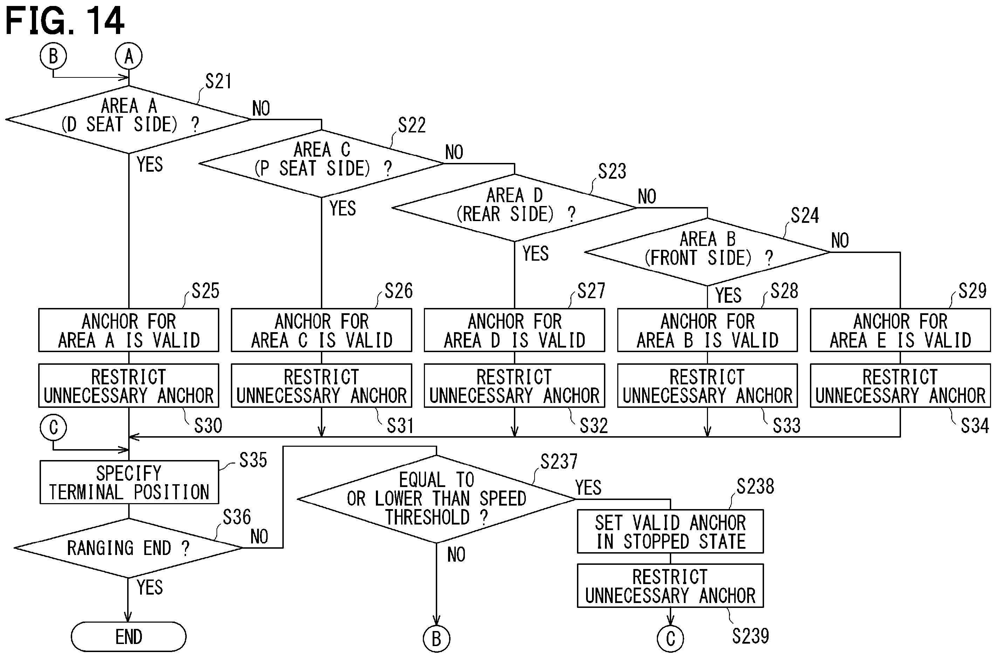

The details of ranging communication process according to the second embodiment will be described with reference to FIG. 14, together with FIG. 2, FIG. 9, FIG. 12, and FIG. 13. In the ranging communication process of the second embodiment, the process executed in S11 to S14 (see FIG. 10) and S21 to S36 are substantially the same as those in the first embodiment.

In S36 of the ranging communication process, when the processing circuit 50 decides to continue ranging process, the communication control unit 52 calculates a moving speed of the mobile terminal 110 in S237 based on the ranging data from the multiple anchors 30 (valid anchors 3E). The communication control unit 52 determines whether the calculated moving speed of mobile terminal 110 is equal to or lower than a speed threshold. The speed threshold is a value used to determine whether the mobile terminal 110 is in moving state, and may be set to a value close to zero.

In response to the moving speed of mobile terminal 110 exceeds the threshold (S237: NO), the communication control unit 52 returns to S21 and executes the process from S21. Based on the terminal position information specified in the previous S35, the communication control unit 52 specifies the current terminal area and determines the valid anchor 3E and the unnecessary anchor 3D. Then, the position specifying unit 53 updates the terminal position.

When the moving speed of mobile terminal 110 is equal to or below the speed threshold and the user is in a stopped state without moving (S237: YES), the communication control unit 52 determines the valid anchor 3E corresponding to the stopped state of user in S238. In this case, only the inside anchor arranged in the vehicle is set as the valid anchor 3E. In S239, the communication control unit 52 designates all anchors other than the valid anchor 3E corresponding to the stopped state as unnecessary anchors 3D. Then, the position specifying unit 53 specifies the terminal position in next S35, based on the ranging data of the valid anchor 3E determined in S238.

In S239, the communication control unit 52 stops all anchors other than the valid anchor 3E corresponding to the stopped state as unnecessary anchor 3D. Then, in the following execution of S237, in response to determining that the moving speed of the mobile terminal 110 exceeds the speed threshold (S237: NO), the communication control unit resets the valid anchor 3E. For example, the communication control unit 52 stores the setting of the valid anchor 3E before the moving speed decreases to equal to or lower than the threshold, and activates the stored valid anchor 3E when the moving speed exceeds the threshold again. As another example, the communication control unit 52 may activate all anchors 30 once the moving speed exceeds the threshold again. The communication control unit 52 specifies the terminal area and determines the valid anchors 30 by LE-CS ranging using all anchors 30.

In the second embodiment described above, the same effects as in the first embodiment can be achieved. That is, by limiting LE-CS ranging using unnecessary anchor 3D, it becomes possible to reduce communication occupancy rate and, consequently, suppress radio wave interference.

In addition, in the second embodiment, the valid anchor 3E is determined based not only on the terminal area but also on the moving speed of the mobile terminal 110. Therefore, while the mobile terminal 110 is not moving, the communication control unit 52 can set a part of the valid anchor 3E (for example, the outer anchor) to the unnecessary anchor 3D additionally. In this way, the number of valid anchors 3E is suppressed to a level that can confirm the stopped state of user. As described above, reducing the number of anchors performing LE communication can further suppress radio interference. When the user begins to move again from the stopped state, the communication control unit 52 increases the number of valid anchors 3E again. Therefore, the vehicle-mounted key system 100 can accurately track the position of the user when the user restarts to move.

### (Third Embodiment)

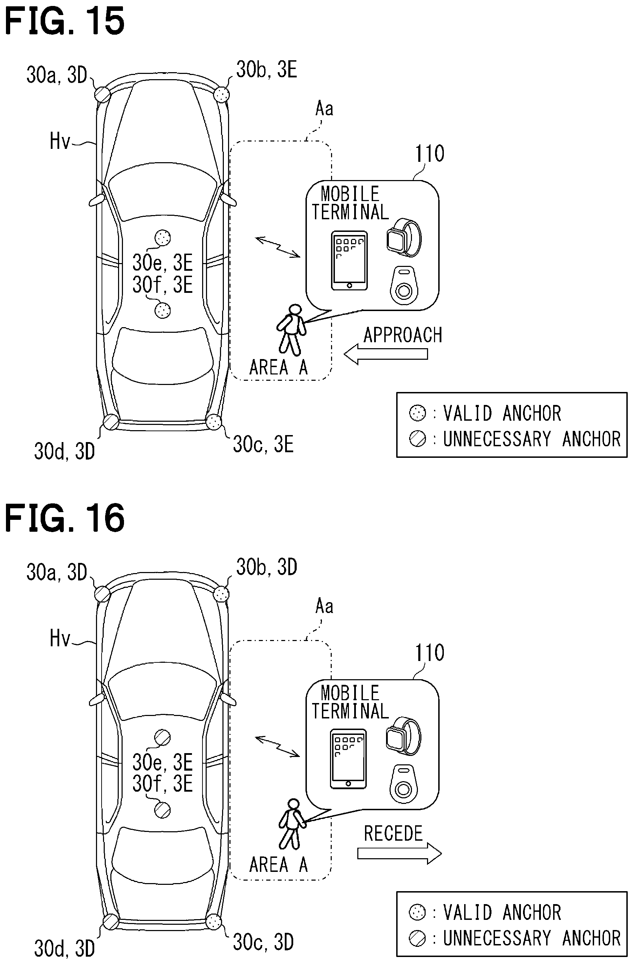

A third embodiment of the present disclosure shown in FIG. 15 to FIG. 17 is another modification of the first embodiment. In the third embodiment, the number of anchors is controlled using a moving direction of the mobile terminal 110 with respect to the vehicle Hv. In a case where the mobile terminal 110 is within a predetermined distance from the vehicle Hv, the communication control unit 52 changes the number of valid anchors 3E depending on whether the user carrying the mobile terminal 110 is approaching the vehicle Hv.

When the mobile terminal 110 is approaching the vehicle Hv (see FIG. 15), the communication control unit 52 determines the valid anchors 3E and unnecessary anchors 3D correlated to each terminal area, similar to the first embodiment (see FIG. 8). When the mobile terminal 110 is moving away from the vehicle Hv (see FIG. 16), the communication control unit 52 reduces the number of valid anchors 3E compared to the case where the mobile terminal approaches the vehicle. The communication control unit 52, for example, sets the inside anchor from the valid anchor 3E to the unnecessary anchor 3D.

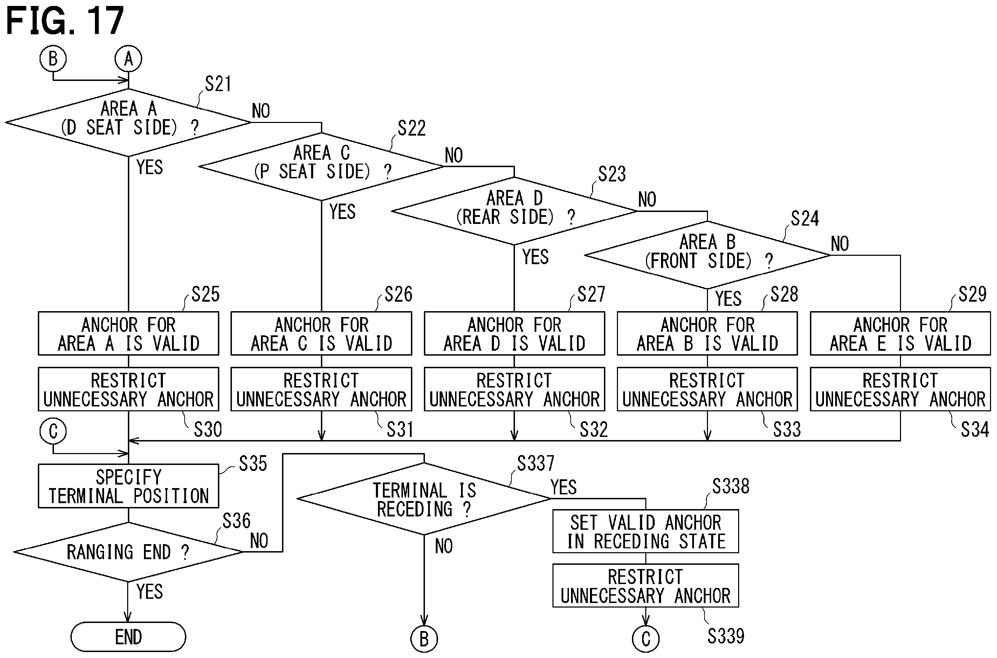

The details of ranging communication process according to the third embodiment will be described with reference to FIG. 17, together with FIG. 2, FIG. 9, FIG. 15, and FIG. 16. In the ranging communication process of the third embodiment, the process executed in S11 to S14 (see FIG. 10) and S21 to S36 are substantially the same as those in the first embodiment.

In S36 of the ranging communication process, when the processing circuit 50 decides to continue ranging process, the communication control unit 52 calculates a moving direction of the mobile terminal 110 in S337 based on the ranging data from the multiple anchors 30 (valid anchors 3E). The communication control unit 52 determines whether the calculated moving direction of the mobile terminal 110 is toward the vehicle Hv (hereinafter referred to as an approaching direction) or away from the vehicle Hv (hereinafter referred to as a receding direction).

When the mobile terminal 110 is moving in the approaching direction (S337: NO), the communication control unit 52 returns to S21 and executes the process from S21. Based on the terminal position information specified in the previous S35, the communication control unit 52 specifies the current terminal area and determines the valid anchor 3E and the unnecessary anchor 3D. Then, the position specifying unit 53 updates the terminal position. When the mobile terminal 110 has no substantial moving speed, the communication control unit 52 may consider that the mobile terminal is moving in the approaching direction and may return to S21 and execute the process from S21.

When the mobile terminal 110 is moving in the receding direction (S337: YES), the communication control unit 52 determines the valid anchor 3E corresponding to the receding state of user in S338. In this case, only the outer anchor is set as the valid anchor 3E. In S339, the communication control unit 52 designates all anchors other than the valid anchor 3E corresponding to the receding state as unnecessary anchors 3D. Then, the position specifying unit 53 specifies the terminal position in next S35, based on the ranging data of the valid anchor 3E determined in S338.

In S339, the communication control unit 52 stops all anchors other than the valid anchor 3E corresponding to the receding state of user as unnecessary anchor 3D. Then, in the following execution of S337, in response to determining that the mobile terminal 110 is moving in approaching direction (S337: NO), the communication control unit resets the valid anchor 3E. For example, the communication control unit 52 stores the setting of valid anchor 3E before the moving direction of mobile terminal 110 changes to the receding direction, and activates the stored valid anchor 3E when the moving direction of mobile terminal 110 becomes the approaching direction again. As another example, the communication control unit 52 may activate all anchors 30 once the moving direction of mobile terminal 110 changes to the approaching direction again. The communication control unit 52 specifies the terminal area and determines the valid anchors 30 by LE-CS ranging using all anchors 30.

In the third embodiment described above, the same effects as in the second embodiment can be achieved. That is, by limiting LE-CS ranging using unnecessary anchor 3D, it becomes possible to reduce communication occupancy rate and, consequently, suppress radio wave interference.

In addition, in the third embodiment, the valid anchor 3E is determined based not only on the terminal area but also on the moving direction of the mobile terminal 110. Therefore, while the mobile terminal 110 is moving away from the vehicle Hv, the communication control unit 52 can set a part of the valid anchor 3E (for example, the inside anchor) to the unnecessary anchor 3D additionally. As described above, when the mobile terminal 110 is approaching the vehicle Hv, it is possible to increase the number of valid anchors 3E to improve the determination accuracy of terminal position. When the mobile terminal 110 is moving away from the vehicle Hv, the number of valid anchors 3E can be reduced thereby suppressing radio wave interference.

### (Fourth Embodiment)

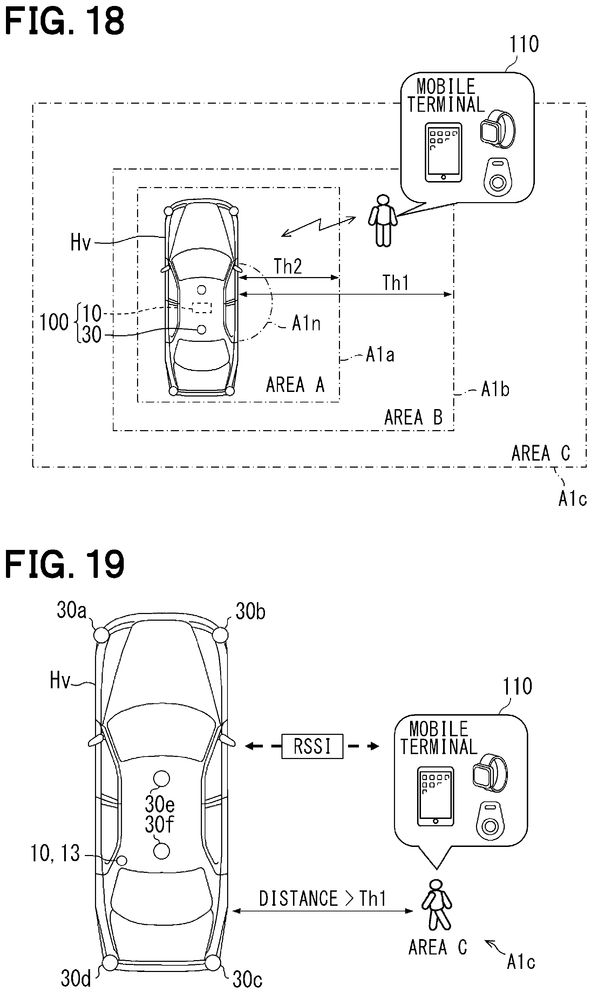

A fourth embodiment of the present disclosure shown in FIG. 18 to FIG. 22 is another modification of the first embodiment. In the vehicle-mounted key system 100 according to the fourth embodiment, instead of restriction control, which sets a part of the multiple anchors 30 as unnecessary anchors 3D, a restriction control that switches an execution mode of LE-CS ranging is executed. The following describes a configuration of processing circuit and details of ranging communication process according to the fourth embodiment.

### (Configuration of processing circuit)

The processing circuit 50 of the fourth embodiment includes, as functional blocks, an information storage unit 51, a communication control unit 52, and a position specifying unit 53, similar to the configuration descried in the first embodiment shown in FIG. 9.

The information storage unit 51 stores information for setting the terminal area where the mobile terminal 110 is located. The information storage unit 51 stores three threshold values Th1 to Th3 as information for setting the terminal area. Thresholds Th1 to Th3 each is a value that is to be compared with the measured distance from the vehicle Hv to the mobile terminal 110. Threshold Th1 is set to a value greater than the threshold Th2. The threshold Th2 is set to a value greater than the threshold Th3.

Around the vehicle Hv, a remote area A1c, an intermediate area A1b, and a nearby area A1a are defined, respectively. The remote area A1c (see area C in FIG. 18) is a terminal area where the ranging value to the mobile terminal 110 is greater than the threshold Th1. The intermediate area A1b (see area B in FIG. 18) is a terminal area where the ranging value to the mobile terminal 110 is equal to or less than the threshold Th1 and greater than threshold Th2. The nearby area A1a (see area A in FIG. 18) is a terminal area where the ranging value to the mobile terminal 110 is equal to or less than the threshold Th2. In the nearby area A1a, the terminal area facing the door of driver seat is designated as an unlocking area A1n. The unlocking area A1n is a terminal area where the ranging value to the mobile terminal 110 is equal to or less than the threshold Th3.

The communication control unit 52 determines the execution mode of LE-CS ranging to be performed by the anchor 30 based on information indicating the position of the mobile terminal 110. As described above, the anchor 30 is capable of performing LE-CS ranging in mode 1 to mode 3 (see FIG. 6). Mode 1 of LE-CS ranging is an execution mode that transmits and receives RTT packet to calculate the time of flight of the signal. Mode 2 of LE-CS ranging is an execution mode that transmits and receives the CW signal to calculate the phase of signal. Mode 3 of LE-CS ranging is an execution mode that transmits and receives RTT packet in addition to the CW signal. LE-CS ranging in Mode 1 corresponds to a first mode, and LE-CS ranging in Mode 2 and Mode 3 corresponds to a second mode. In the first mode, CW signals are not transmitted or received. In the second mode, RTT packet is not transmitted or received.

The communication control unit 52 identifies the terminal area where the mobile terminal 110 is located among the multiple terminal areas, based on the ranging data obtained by RSSI ranging. When the ranging communication continues after the position specifying unit 53 has specified the position of the mobile terminal 110, the communication control unit 52 may specify the terminal area again based on the latest ranging data specified by the position specifying unit 53. The communication control unit 52 switches the ranging method between RSSI ranging and LE-CS ranging based on the information of specified terminal area. When performing LE-CS ranging, the communication control unit 52 switches the execution mode of LE-CS ranging to be performed by the anchor 30 from mode 1 to mode 3, based on the information indicating specified terminal area. The communication control unit 52 switches the ranging method to improve the accuracy of the ranging information as the mobile terminal 110 approaches the vehicle Hv.

The communication control unit 52 determines that the mobile terminal 110 is located in the remote area A1c (area C) when the distance (ranging value) to the mobile terminal 110 exceeds the threshold Th1 (see FIG. 19). When the mobile terminal 110 is located in the remote area A1c, the communication control unit 52 performs RSSI ranging.

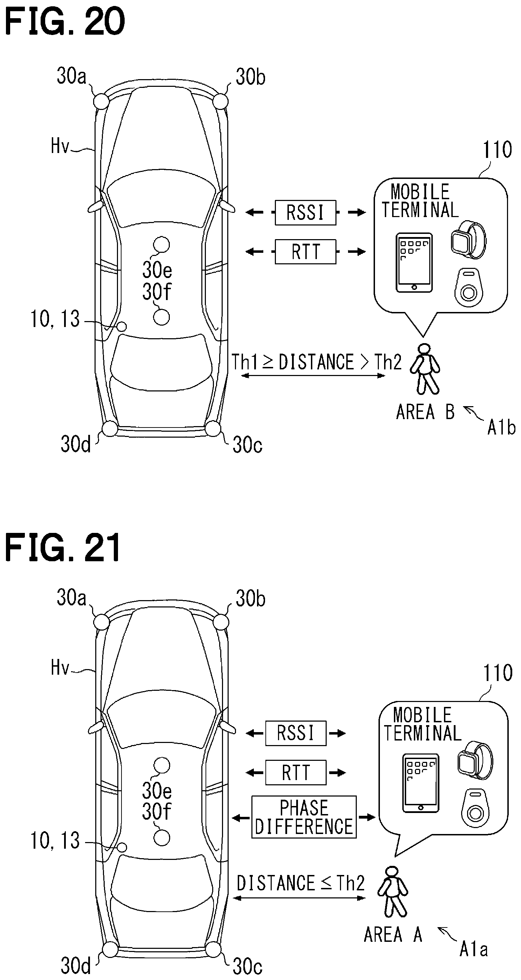

The communication control unit 52 determines that the mobile terminal 110 is located in the intermediate area A1b (area B) when the distance to the mobile terminal 110 is equal to or less than the threshold Th1 and greater than the threshold Th2 (see FIG. 20). When the mobile terminal 110 is located in the intermediate area A1b, the communication control unit 52 determines the execution mode of the LE-CS ranging to mode 1. Then, the anchor 30 performs the RTT ranging.

The communication control unit 52 determines that the mobile terminal 110 is located in the nearby area A1a when the distance to the mobile terminal 110 is equal to or less than the threshold Th2 (see FIG. 21). When the mobile terminal 110 is located in the nearby area A1a (see area A in FIG. 18), the communication control unit 52 determines the execution mode of LE-CS ranging to mode 2 or mode 3. Thus, the anchor 30 can perform the phase difference ranging.

The RSSI ranging by the gateway module 13 may be performed in parallel with LE-CS ranging in mode 1 to mode 3. When the communication control unit 52 performs phase difference ranging, the communication control unit may always perform RTT ranging together with phase difference ranging. Alternatively, the communication control unit may perform RTT ranging together with phase difference ranging for confirmation purposes when locking or unlocking the vehicle Hv. The communication control unit 52 may perform LE-CS ranging in mode 3 when the mobile terminal 110 is located in the unlocking area A1n, and may perform LE-CS ranging in mode 2 when the mobile terminal 110 is located in the nearby area A1a outside the unlocking area A1n.

The anchor 30 transmits and receives CW signals on multiple channels in LE-CS ranging in mode 2 and mode 3. The communication control unit 52 determines, based on information indicating the position of the mobile terminal 110, whether to transmit and receive CW signals using a specified reference number of channels or a limited number of channels less than the specified reference number. The reference number of channels may be, for example, 72 out of 80 channels set at 1 MHz intervals from 2400 MHz to 2480 MHz. The limited number of channels is less than 72 channels, for example, about half the number of reference number of channels. The limited number of channels may be set at 2MHz intervals within a bandwidth of, for example, 2400MHz to 2480MHz.

When the communication control unit 52 determines that the distance to the mobile terminal 110 is equal to or less than the threshold Th3 and that the mobile terminal 110 is in the unlocking area A1n, the communication control unit 52 decides to send and receive the CW signal using the reference number of channels. When the mobile terminal 110 is located in the nearby area A1a outside the unlocking area A1n, the communication control unit 52 decides to send and receive CW signals using the limited number of channels.

The position specifying unit 53 determines the position of the mobile terminal 110 based on the ranging data obtained by the ranging method determined by the communication control unit 52. As described above, when the ranging communication continues after the position specifying unit 53 has specified the position of the mobile terminal 110, the communication control unit 52 determines the ranging method and execution mode again based on the latest ranging data specified by the position specifying unit 53. The position specifying unit 53 specifies the position of the mobile terminal 110 again based on the reset ranging method and execution mode.

### (Details of ranging communication process)

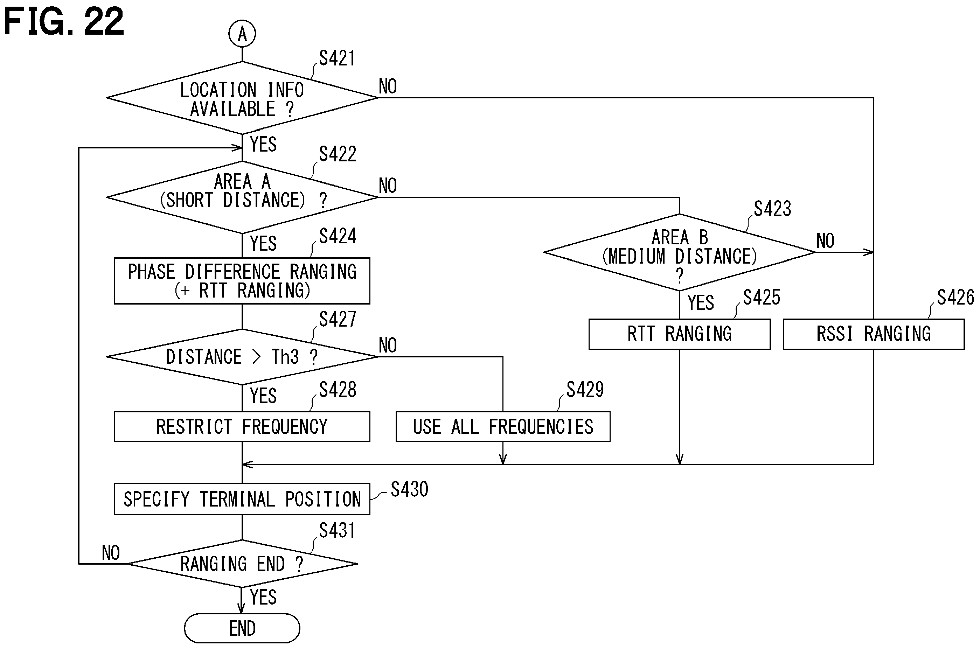

The details of ranging communication process according to the fourth embodiment will be described with reference to FIG. 22, together with FIG. 9, FIG. 10, FIG. 18 to FIG. 21.

When the mobile terminal 110 is located within the predetermined distance (FIG. 10, S14: YES), the communication control unit 52 determines in S421 whether the location information (ranging data) that has been acquired within a predetermined period is available. For example, in a scene where the user approaches the vehicle Hv from a distance and the anchor 30 and the mobile terminal 110 are temporarily in sleep states, location information acquired immediately before may exist. In this case, the communication control unit 52 determines that previously acquired location information is available.

When no previously acquired location information is available (S421: NO), the communication control unit 52 decides in S426 to perform RSSI ranging using the gateway module 13. When the previously acquired location information is available (S421: YES), the communication control unit 52 decides to perform LE-CS ranging in S422 and S423, and further determines the execution mode of LE-CS ranging.

In S422, the communication control unit 52 determines whether the ranging value is equal to or less than the threshold Th2, that is, whether the mobile terminal 110 is located in the nearby area A1a (area A). In S422, the communication control unit 52 determines whether the ranging value is equal to or less than the threshold Th1, that is, whether the mobile terminal 110 is located in the intermediate area A1b (area B). When the mobile terminal 110 is not located in the nearby area A1a or the intermediate area A1b, but is located in the remote area A1c (S422, S423: both NO), the communication control unit 52 decides in S426 to perform RSSI ranging using the gateway module 13. Then, in S426, ranging data is acquired by performing RSSI ranging.

When the mobile terminal 110 is located in the intermediate area A1b (S423: YES), the communication control unit 52 decides in S425 to perform RTT ranging in mode 1 using the anchor 30. When the mobile terminal 110 is located in the nearby area A1a (S422: YES), the communication control unit 52 decides in S424 to perform phase difference ranging in mode 2 or mode 3 using the anchor 30. In S424 and S425, ranging data is acquired by performing LE-CS ranging.

When the communication control unit 52 performs phase difference ranging, in S427, the communication control unit further determines whether the distance (ranging value) to the mobile terminal 110 exceeds the threshold Th3. When the distance to the mobile terminal 110 exceeds the threshold Th3 (S427: YES), that is, the mobile terminal 110 is located in the nearby area A1a outside the unlocking area A1n, the communication control unit 52 restricts the frequencies (number of channels) of the CW signals transmitted and received by the anchor 30 in S428. When the user is not located in the nearby area A1a, the best possible ranging accuracy is not required, and the frequency restriction is performed in S428 to reduce the communication occupancy rate. When the distance to the mobile terminal 110 is equal to or less than the threshold Th3 (S427: NO), that is, the mobile terminal 110 is located in the unlocking area A1n, the communication control unit 52 decides in S429 to use all frequencies (reference number of channels).

The position specifying unit 53 specifies the terminal position in S430 based on the ranging data acquired in S424 to S426. In S431, the processing circuit 50 determines whether to terminate the ranging process. The processing circuit 50 determines termination of ranging process when no signal is received from the mobile terminal 110 (S431: YES), and terminates the ranging communication process. When the receiving of signals from the mobile terminal 110 continues, the processing circuit 50 decides to continue ranging (S431: NO). In this case, the processes in S422 to S431 is executed again.

### (Summary of Fourth Embodiment)

In the above-described fourth embodiment, the ranging method can be switched, depending on the location of the mobile terminal 110, between LE-CS ranging in mode 1, which transmits and receives RTT packet, and LE-CS ranging in mode 2 or mode 3, which transmits and receives CW signals. Thus, by using RTT packets, which have shorter transmission and reception duration than CW signals, in the mode 1 of ranging communication, radio interference can be suppressed. By suppressing radio wave interference through the above-mentioned switching of ranging method, in other words, by reducing the communication occupancy rate, deterioration in the responsiveness of the digital key system can be suppressed even in a case where multiple mobile terminals 110 are present around the vehicle Hv.

In the fourth embodiment, the terminal area where the mobile terminal 110 is located is specified based on the value related to the radio wave strength of LE communication, that is, RSSI. Then, the communication control unit 52 determines the execution mode of the LE-CS ranging to be performed by the anchor 30 based on the terminal area information specified using RSSI. Based on the above configuration, the approximate location of the mobile terminal 110 can be determined by RSSI ranging before the start of LE-CS ranging. As a result, it becomes possible to select the appropriate execution mode from the start of LE-CS ranging and suppress radio interference.

In the fourth embodiment, the terminal area where the mobile terminal 110 is located is specified based on the ranging data acquired by LE-CS ranging. Then, the communication control unit 52 determines the execution mode of the LE-CS ranging to be performed by the anchor 30 based on the terminal area information specified using the ranging data. By using the ranging data of LE-CS ranging, the terminal area where the mobile terminal 110 is located can be accurately determined. As a result, it becomes possible to appropriately select the execution mode of LE-CS ranging, ensuring the necessary ranging accuracy while suppressing radio interference.

In the fourth embodiment, the anchor 30 transmits and receives CW signals on multiple channels during LE-CS ranging executed in mode 2 and mode 3. The communication control unit 52 determines, based on information indicating the position of the mobile terminal 110, whether to transmit and receive CW signals using the specified reference number of channels or the limited number of channels set to be fewer than the specified reference number. By transmitting and receiving CW signals using the limited number of channels fewer than the specified reference number, the communication occupancy rate can be reduced even in execution of 2 or mode 3 of ranging communication. As a result, radio interference can be further suppressed.

In the fourth embodiment, when the ranging communication is continued after the position specifying unit 53 has specified the location of the mobile terminal 110, the communication control unit 52 determines again the execution mode of LE-CS ranging to be performed by the anchor 30 based on the latest ranging data. As described above, when the execution mode of LE-CS ranging is updated based on the latest ranging data, the communication control unit 52 can appropriately switch the execution mode of LE-CS ranging even if the user carrying the mobile terminal 110 is in a moving state. In the fourth embodiment, the nearby area A1a, the intermediate area A1b, and the remote area A1c each corresponds to the terminal area.

### (Fifth Embodiment)

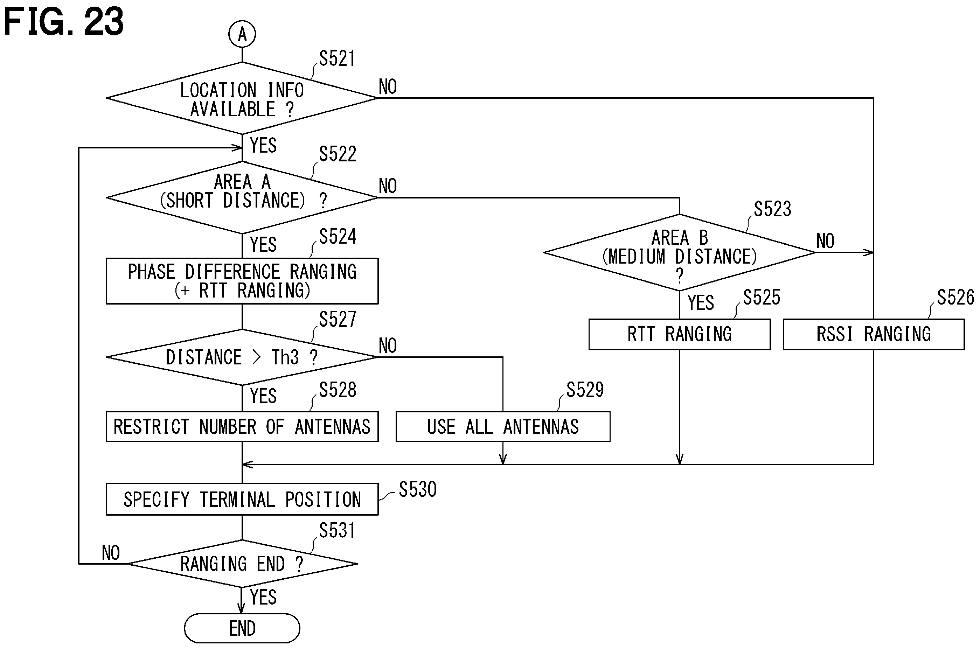

The fifth embodiment of the present disclosure shown in FIG. 23 is a modification of the fourth embodiment. In the ranging communication process of the fifth embodiment, instead of a process that limits the number of channels on which CW signals are transmitted and received, a process is executed to limit the number of antennas from which CW signals are transmitted and received. The details of the ranging communication process of the fifth embodiment will be described with reference to FIG. 23, together with FIG. 3, FIG. 9, and FIG. 18. The processes executed in S521 to S526, S530, and S531 are substantially the same as the process executed in S421 to S426, S430, and S431 of the fourth embodiment (see FIG. 22).

When the communication control unit 52 performs phase difference ranging in mode 2 and mode 3, in S527, the communication control unit determines whether the mobile terminal 110 is within the unlocking area A1n by comparing the measured distance to the mobile terminal 110 (measured distance value) with the threshold Th3. When the distance to the mobile terminal 110 is equal to or less than the threshold Th3 (S527: NO), that is, the mobile terminal 110 is located in the unlocking area A1n, the communication control unit 52 decides in S529 to send and receive CW signals with a specified reference number of antennas (that is, two antennas). Thus, the anchor 30 performs phase difference ranging using all antennas 31 and 32.

When the distance to the mobile terminal 110 exceeds the threshold Th3 (S527: YES), that is, the mobile terminal 110 is located in the nearby area A1a outside the unlocking area A1n, the communication control unit 52 determines in S528 to restrict the number of antennas that transmit and receive CW signals. In this case, the anchor 30 transmits and receives CW signals with restricted number of antennas (that is, one antenna) which is fewer than the specified reference number of antennas. Then, the phase difference ranging is performed using only one anchor antenna.

In the fifth embodiment described above, the ranging communication in mode 1 using RTT packets is performed at an appropriate timing, instead of ranging communication in mode 2 and mode 3 using CW signals. Therefore, the fifth embodiment can provide same effects as the fourth embodiment, that is, can reduce communication occupancy rate and, consequently, suppress radio wave interference.

In the fifth embodiment, the anchor 30 has multiple antennas 31, 32 that transmit and receive CW signals. The communication control unit 52 determines, based on information indicating the position of the mobile terminal 110, whether to transmit and receive CW signals using the specified reference number of antennas or the limited number of antennas set to be fewer than the specified reference number. As described above, by limiting the number of anchor antennas that transmit and receive CW signals, the communication occupancy rate can be further decreased.

### (Sixth Embodiment)

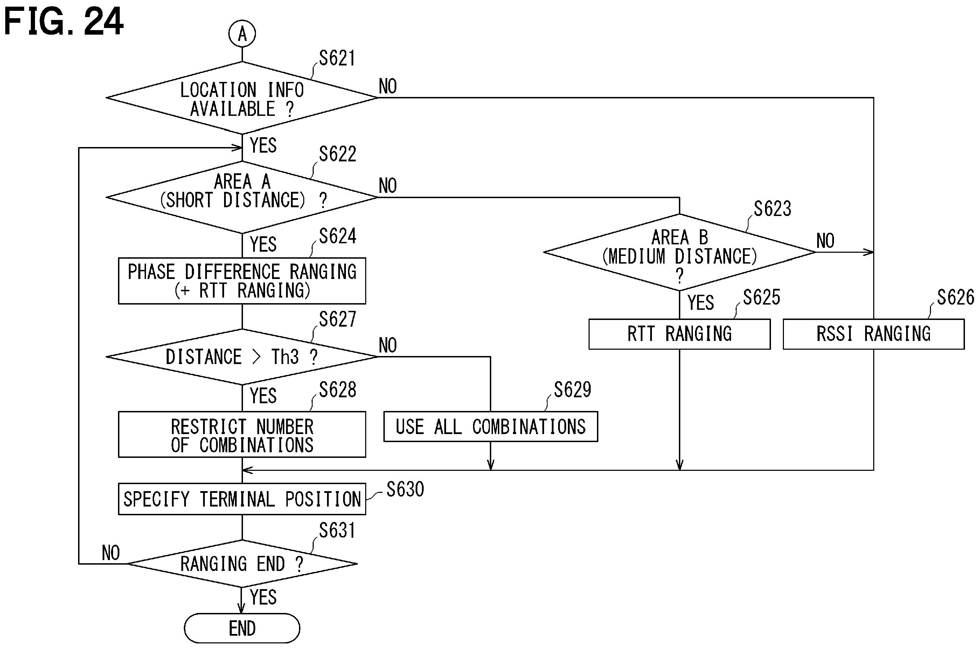

The fifth embodiment of the present disclosure shown in FIG. 24 is another modification of the fourth embodiment. In the ranging communication process of the sixth embodiment, instead of a process that limits the number of channels on which CW signals are transmitted and received, a process is executed to limit the number of combinations of communication paths between the anchor 30 and the mobile terminal 110. As described above, between the anchor 30 and the mobile terminal 110, four communication paths (antenna paths) are available by combining the two anchor antennas 31 and 32 and the two terminal antennas 121 and 122 (see FIG. 7). The above-described four communication paths is the specified reference number of combinations. The communication control unit 52 decides to send and receive CW signals with a limited number of combinations that is set to be less than the reference number of combinations. Thus, for a part of the communication paths among the four communication paths, use of the communication path is restricted.

The details of the ranging communication process of the sixth embodiment will be described with reference to FIG. 24, together with FIG. 3, FIG. 9, and FIG. 18. The processes executed in S621 to S626, S630, and S631 are substantially the same as the process executed in S421 to S426, S430, and S431 of the fourth embodiment (see FIG. 22).

When the communication control unit 52 performs phase difference ranging in mode 2 and mode 3, in S627, the communication control unit determines whether the mobile terminal 110 is within the unlocking area A1n by comparing the measured distance to the mobile terminal 110 (measured distance value) with the threshold Th3. When the distance to the mobile terminal 110 is equal to or less than the threshold Th3 (S627: NO), that is, the mobile terminal 110 is located in the unlocking area A1n, the communication control unit 52 decides in S629 to send and receive CW signals with the specified reference number of path combinations. Thus, the anchor 30 performs phase difference ranging using all antenna paths with the mobile terminal 110.

When the distance to the mobile terminal 110 exceeds the threshold Th3 (S627: YES), that is, the mobile terminal 110 is located in the nearby area A1a outside the unlocking area A1n, the communication control unit 52 determines in S628 to restrict the number of antenna combinations. In this case, the anchor 30 and the mobile terminal 110 perform phase difference ranging using only a part of the antenna paths.

Therefore, the sixth embodiment can provide same effects as the fourth embodiment, that is, can reduce communication occupancy rate and, consequently, suppress radio wave interference.

In the sixth embodiment, CW signals are transmitted and received between the anchor antennas 31 and 32 and the terminal antennas 121 and 122. Multiple combinations of communication paths are set between the anchor antennas 31 and 32 and the terminal antennas 121 and 122. The communication control unit 52 determines, based on information indicating the location of the mobile terminal 110, whether to send and receive CW signals with the specified reference number of combinations or with the limited number of combinations set to be less than the reference number of combinations. As described above, by limiting the combination of antennas used to transmit and receive CW signals, or in other words, the number of antenna paths, it becomes possible to further reduce the communication occupancy rate.

### (Seventh Embodiment)

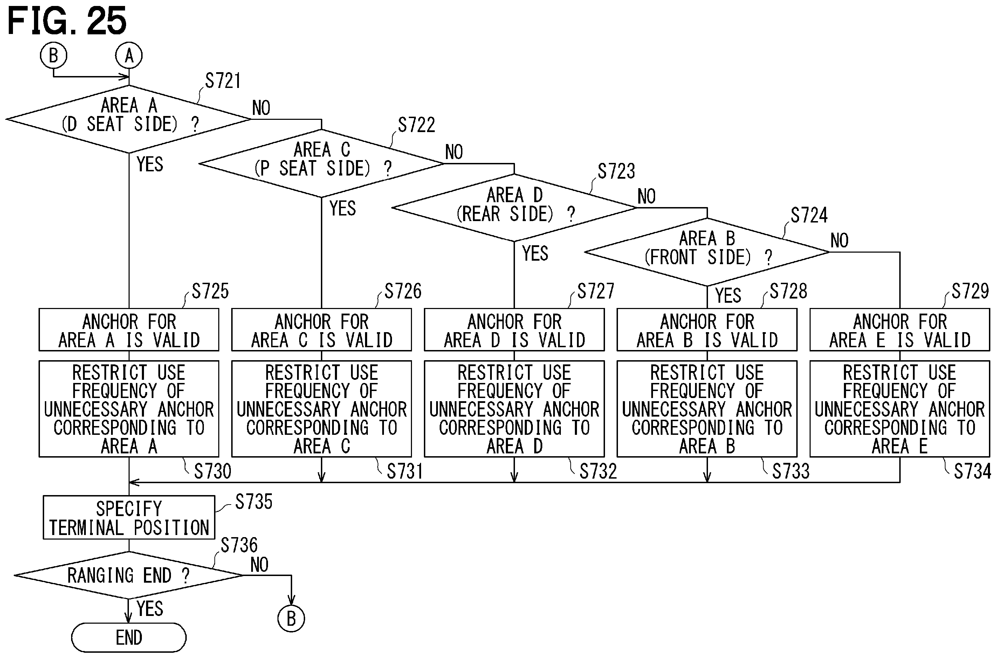

The seventh embodiment of the present disclosure shown in FIG. 25 is another modification of the first embodiment. In the seventh embodiment, as a process to restrict the operation of unnecessary anchor 3D, the communication control unit 52 restricts the frequencies (number of channels) to be used by the unnecessary anchor 3D in the phase difference ranging. The communication control unit 52 sets the number of channels to be used by the unnecessary anchor 3D in the phase difference ranging (for example, 72 channels) less than the number of channels to be used by the valid anchor 3E int he phase difference ranging.

The details of the ranging communication process of the seventh embodiment will be described with reference to FIG. 25, together with FIG. 3, FIG. 4, and FIG. 8. The processes executed in S721 to S729, S735, S736 are substantially the same as the process executed in S21 to S29, S35, and S36of the first embodiment (see FIG. 11).

When the mobile terminal 110 is located within the predetermined distance (S14: YES), the communication control unit 52 specifies the terminal area where the mobile terminal 110 is located by executing S721 to S724, RSSI ranging, or the result of previous LE-CS ranging. In S725 to S729, the communication control unit 52 determines the valid anchor 3E from multiple anchors 30 based on the information of specified terminal area and the correlation information stored in the information storage unit 51.

When the mobile terminal 110 is located in the driver seat area Aa (area A) (S721: YES), the communication control unit 52 determines the valid anchor 3E and the unnecessary anchor 3D corresponding to the driver seat area Aa in S725 and S730. In S730, the frequency used by the unnecessary anchor 3D corresponding to the driver seat area Aa is restricted.

When the mobile terminal 110 is located in the passenger seat area Ac (area C) (S722: YES), the communication control unit 52 determines the valid anchor 3E and the unnecessary anchor 3D corresponding to the passenger seat area Ac in S726 and S731. In S731, the frequency used by the unnecessary anchor 3D corresponding to the passenger seat area Ac is restricted.

When the mobile terminal 110 is located in the rear area Ad (area D) (S723: YES), the communication control unit 52 determines the valid anchor 3E and the unnecessary anchor 3D corresponding to the rear area Ad in S727 and S732. In S732, the frequency used by the unnecessary anchor 3D corresponding to the rear area Ad is restricted.

When the mobile terminal 110 is located in the front area Ab (area B) (S724: YES), the communication control unit 52 determines the valid anchor 3E and the unnecessary anchor 3D corresponding to the front area Ab in S728 and S733. In S733, the frequency used by the unnecessary anchor 3D corresponding to the front area Ab is restricted.

When the mobile terminal 110 is not located in the front area Ab (S724: NO), in other words, when the mobile terminal 110 is located in the outer area Ae, the communication control unit 52 determines the valid anchor 3E and the unnecessary anchor 3D corresponding to the outer area Ae in S729. In S734, the frequency used by the unnecessary anchor 3D corresponding to the outer area Ae is restricted.

In the seventh embodiment described above, the same effects as in the first embodiment can be achieved. That is, by limiting LE-CS ranging in the unnecessary anchor 3D, it becomes possible to reduce communication occupancy rate and, consequently, suppress radio wave interference.

In the seventh embodiment, as a process to restrict the operation of unnecessary anchor 3D, the frequencies to be used by the unnecessary anchor 3D in the LE-CS ranging is restricted. In this way, the number of frequencies to be used by the unnecessary anchor 3D is restricted. Thus, it is possible to reduce the communication occupancy rate and, consequently, suppress radio interference.

### (Details of LE-CS ranging/phase difference ranging)

The communication controller 40 of the anchor 30 (see FIG. 3) is equipped with a CS ranging unit as a functional block for performing LE-CS ranging. The CS ranging unit may be provided in the communication controller of the gateway module 13. The CS ranging unit provided in the anchor 30 or the DK-ECU 10 acquires the received phase for each frequency, for example, using one-way method. The one-way method assumes that the initial phase of the CW signal transmitted from the mobile terminal 110 for each frequency is constant, and uses the received phase of the CW signal transmitted from the mobile terminal 110 directly as the basis for calculating the inter-frequency phase difference. The received phase (in other words, the single frequency phase difference) used as the calculation basis of the inter-frequency phase difference can also be acquired by a passive two-way method, an active two-way method, or the like. Details of the passive two-way method and active two-way method will be described later.

Once the CS ranging unit has completed collecting of the received phase for each frequency, the CS ranging unit calculates the phase change coefficient (α). The phase change coefficient is a parameter indicating a change degree of the received phase according to the change in frequency. The phase change coefficient may also be referred to as a phase change degree, a phase shift amount, or a correlation coefficient between phase and frequency.

The phase shift coefficient is calculated based on the received phases observed at two arbitrary frequencies, for example, a first frequency and a second frequency. Suppose that the frequency difference, which is the difference between the first frequency and the second frequency, is defined as Δf. Suppose that the inter-frequency phase difference, which is the difference between the received phases observed at the first frequency and the received phase observed at the second frequency, is defined as Δφ. The phase change coefficient is defined as α. Then, Δf, Δφ and α satisfy the relationship α = Δφ/Δf. The inter-frequency phase difference (Δφ) is a difference between received phases monitored at two different frequencies. The inter-frequency phase difference can be referred to as a two frequency phase difference or a second-order phase difference. The inter-frequency phase difference corresponds to a displacement amount of a phase angle due to a change in the use frequency.

The CS ranging unit of the present embodiment calculates a regression line L showing the relationship between frequency and received phase based on the received phase for each frequency, and adopts the slope of regression line L as the phase change coefficient. This is because the slope of regression line L indicates the displacement amount of the received phase with respect to the frequency shift amount. The regression line L and its slope can be calculated using a variety of methods, such as the least squares method. When the regression line L is represented in a form of y = ax + b, then the coefficient a of x corresponds to the slope of regression line L. That is, the CS ranging unit can calculate the coefficient (a) as the phase change coefficient (α). According to this configuration, it is possible to calculate the phase change coefficient based on the inter-frequency phase difference and the frequency difference for each combination of different frequencies. In the above equation, "x" is the variable corresponding to frequency, and "y" is the variable corresponding to the received phase. The regression line L can also be referred to as an approximate straight line.

The CS ranging unit may temporarily calculate the regression line L1 based on all of the monitored received phase data, exclude a value (called outlier) at which a distance from the temporarily calculated regression line L1 is equal to or greater than a predetermined value, and then recalculate the regression line L1. As described above, the phase change coefficient used for ranging may be decided based on a regression line having data excluding outliers as a population. According to this configuration, the calculation accuracy of inter-frequency phase difference, and eventually, the distance measurement accuracy can be improved.

The CS ranging unit may also calculate the inter-frequency phase difference (Δφ), the frequency difference (Δf), and the phase change coefficient for each combination of frequencies at which the received phases can be observed. The CS ranging unit may use the average or median value of the phase change coefficients for respective frequency combinations as the phase change coefficient for distance calculation.

The CS ranging unit calculates the device distance (D) using the phase change coefficient generated based on received phase information at multiple frequencies. When the device distance is D, then the relationship between the frequency difference Δf and the inter-frequency phase difference (Δφ) satisfies D ∝ C·Δφ/(2π·Δf) = C·α/2π. In the above formula, the parameter "C" represents the propagation speed of radio waves (that is, 3 × 10^8 m/sec). The CS ranging unit calculates the device distance based on the relation equation.

For example, the CS ranging unit calculates the device distance using Equation 1: D = k * C * α / 2π. The parameter k in formula 1 is a design value, and is set to 1.0 or 0.5. The value of parameter k can be decided by whether the transmission or received phase difference is calculated as a one-way phase change coefficient or as a reciprocating phase change coefficient. The CS ranging unit stores the calculated device distance data in the memory (memory 42) of the controller. In the present disclosure, the communication distance calculated by the communication module 33 or the gateway module 13 (hereinafter referred to as a vehicle-mounted wireless module) using CS ranging process is referred to as the first distance. The first distance can also be referred to as a CS ranging value.

Alternatively, the CS ranging unit may calculate a provisional value (d) of the device distance using Δf and Δφ for each frequency combination, and adopt the average or median value of provisional values as the device distance corresponding to the use antenna. A provisional value (d) of the device distance for a given frequency combination can be calculated using formula d=k·C·Δφ/(2π·Δf).

An outline of the passive two-way method and the active two-way method will be described. The vehicle-mounted wireless module may acquire the single frequency phase difference for each frequency by the active two-way method or the passive two-way method, and calculate the inter-frequency phase difference using the single frequency phase difference. The active two-way method is a method in which an initiator and a reflector mutually transmit and receive a CW signal to detect a phase difference between a transmission signal and a received signal, and a single frequency phase difference is specified using the two phase differences. The active two-way system includes a step in which an initiator and a reflector mutually transmitting and receiving CW signals to each other, and a step in which the reflector transmitting the observed received phase (θr) to the initiator.

The initiator is a device that initiates communication, in other words, a device that requests a response. The reflector is a device that returns a response. For example, the vehicle-mounted wireless module of anchor 30 or DK-ECU 10 corresponds to the initiator, and the mobile terminal 110 corresponds to the reflector. The designation of initiator and the reflector may be reversed.

Suppose that the initial phase of the initiator is δi, the initial phase of the reflector is δr, the single-frequency phase difference that should be observed depending on the distance between the initiator and the reflector is φ, and the target frequency is f, then these parameters satisfy a relationship θr = φ + δi - δr and θi = φ - δi + δr. Based on this relationship, the average of θi and θr is the single-frequency phase difference (φ), in which the initial phase components of the initiator and reflector are cancelled out respectively. The active two-way method corresponds to a method of calculating an average value of the received phase at the initiator and the received phase at the reflector as a single frequency phase difference. Since a phase difference due to one-way propagation assumed, the average value of θi and θr is used as the single-frequency phase difference. As another aspect, in a case where a phase difference due to reciprocating propagation is assumed as the single frequency phase difference, the single frequency phase difference can be obtained by θi+θr.

The passive two-way method is also a method in which the initiator and the reflector transmit and receive the CW signal to and from each other. The difference between the passive two-way method and the active two-way method is that the reflector reflects the received phase of the CW signal transmitted from the initiator on the initial phase of the transmission signal, and then transmits the signal. For example, when the received phase at the reflector is θr, a CW signal expressed as z(t) = A·exp{-i(ωt+θr+2πn)} is transmitted. Herein, A represents amplitude. Herein, ω is the angular frequency corresponding to the target frequency (f), and has the relationship ω = 2πf. Herein, n is a natural number and corresponds to the interval between receiving of CW signal by the reflector and transmission of CW signal. According to this method, the received phase monitored by the initiator does not include the initial phase component of the reflector. The received phase observed by the initiator will be the same value as when receiving a CW signal that has been reflected back by a reflective surface, such as a wall. As a result, the initiator can calculate the single frequency phase difference without acquiring the received phase from the reflector. The passive two-way method has an advantage that the reflector does not need to transmit the received phase message, as compared with the active two-way method. As described above, the single frequency phase difference and the inter-frequency phase difference can be executed in various methods.

### (Other Embodiments)

Although multiple embodiments according to the present disclosure have been described above, the present disclosure is not limited to the above-described embodiments, and can be applied to various embodiments and combinations within a scope not departing from the spirit of the present disclosure.

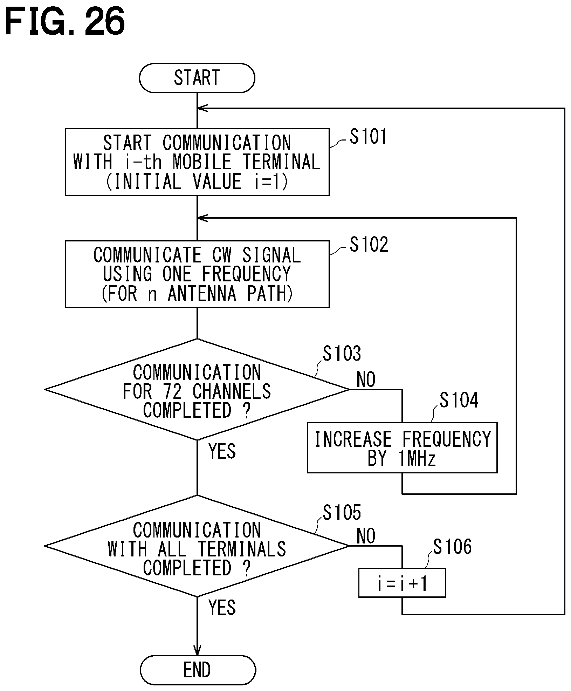

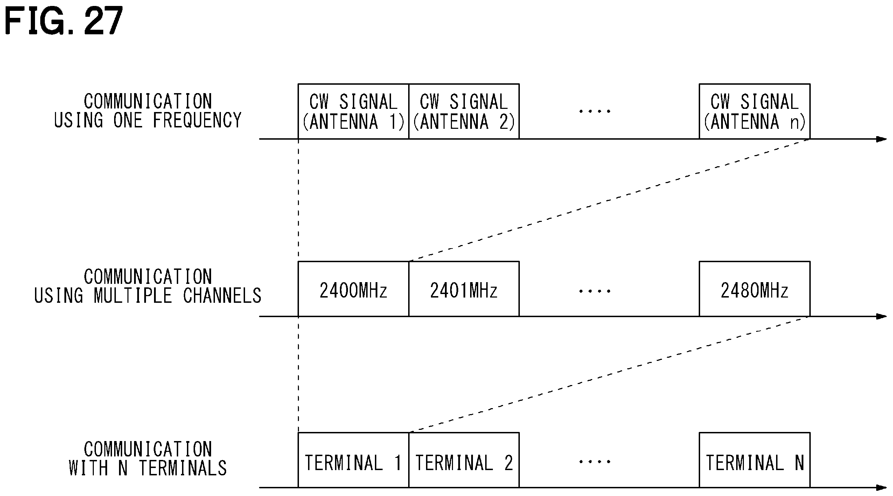

In the above embodiments, the ranging process for determining the position of one mobile terminal 110 is described. As shown in FIG. 26 and FIG. 27, the vehicle-mounted key system 100 can sequentially perform ranging process with multiple mobile terminals 110. In S101, the communication control unit 52 starts a communication with the i-th (first) mobile terminal 110. In S102, the communication control unit 52 transmits and receives the CW signal at a single frequency. The communication control unit 52 transmits and receives CW signals, for a single frequency, by sequentially switching a communication path among the multiple antenna paths (see FIG. 27, upper part).

In S103, the communication control unit 52 determines whether communication has been completed on all channels (for example, 72 channels). When communication is not completed on all channels (S103: NO), the communication control unit 52 increases the frequency by 1 MHz in S104 and performs CW signal communication again in S102 (see FIG. 27, intermediate part).

When communication on all channels is completed (S103: YES), the communication control unit 52 determines in S105 whether communication with all mobile terminals 110 is completed. When a part of the mobile terminals 110 has not completed communication (S105: NO), the communication control unit 52 proceeds to S106 and switches to communication with the (i+1)-th mobile terminal 110. Then, the process returns to S101 and starts communication with the next mobile terminal 110 (see FIG. 27, lower part). When the communication with all mobile terminals 110 is completed (S105: YES), the communication control unit 52 terminates the ranging process.

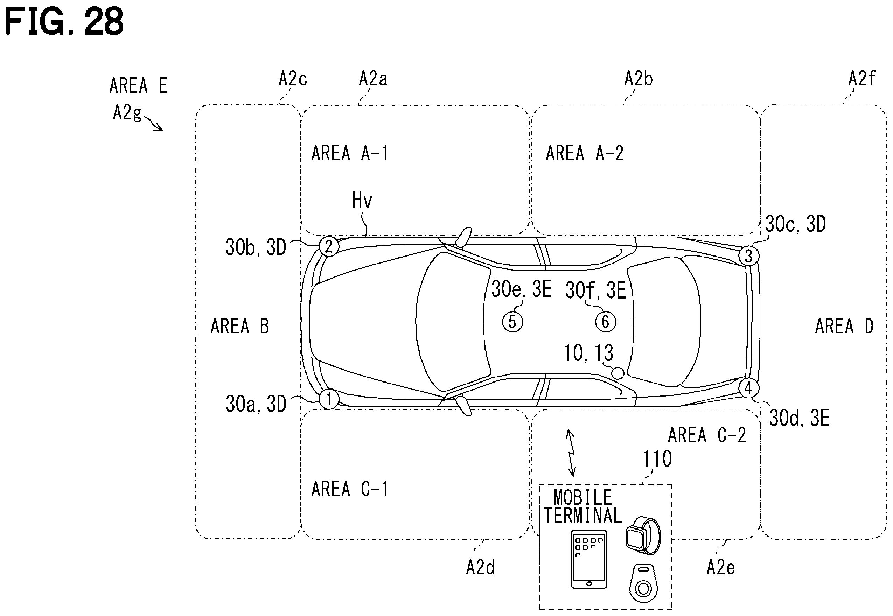

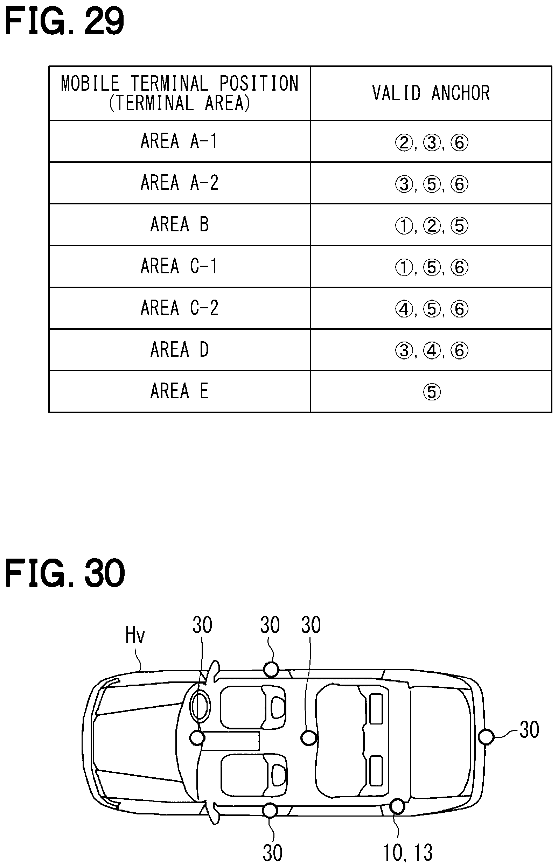

In the modification example 1 of the first embodiment described above, the method for setting the terminal area differs from that of the first embodiment. In the modification example 1, as shown in FIG. 28, front right area A2a (area A-1), rear right area A2b (area A-2), front left area A2d (area C-1), and rear left area A2e (area C-2) are set. Similar to the first embodiment, the front area A2c (area B), the rear area A2f (area D), and the outer area A2g (area E) are set. In this modification example 1, as shown in FIG. 29, correlation information that correlates each terminal area to the valid anchor 3E is stored in the information storage unit 51 in advance.

The number and arrangement of anchors 30 mounted on the vehicle Hv may be changed as appropriate. For example, in the modification example 2 of the above embodiment, as shown in FIG. 30, three anchors 30 may be provided as outer anchors on the left, right, and rear portion of the vehicle Hv. Alternatively, two anchors 30 may be provided in front-rear direction as indoor anchors.

In the above embodiments, the vehicle-mounted key system 100 performs LE communication with the mobile terminal 110. The vehicle-mounted key system 100 according to the modification example 3 of the above embodiments can further perform ultra-wideband (UWB) communication with the mobile terminal 110 as data communication. In the modification example 3, the gateway module 13 of the DK-ECU 10 performs RSSI ranging via UWB communication. As shown in the modification example 3, information indicating the location of the mobile terminal 110 may be obtained by RSSI ranging via UWB communication.

As shown in the modification example 3, in a configuration where UWB ranging communication is performed between the vehicle-mounted key system 100 and the mobile terminal 110, the URSK (UWB Ranging Secret Key) is shared. URSK is a key used in UWB ranging communication. The URSK can be used to create information that proves the communication partner in UWB ranging communication is the authenticated communication partner. After the security of LE communication is ensured by the owner device registration process, the DK-ECU 10 or the mobile terminal 110 may generate the URSK and shares the URSK via LE communication. The DK-ECU 10 stores the URSK associated with the device ID of the mobile terminal 110. By sharing the URSK between the DK-ECU 10 and the mobile terminal 110, the DK-ECU 10 can perform UWB ranging communication with the mobile terminal 110 as the communication partner. The DK-ECU 10 may confirm that UWB ranging communication with the mobile terminal 110 is available by performing UWB ranging using the generated URSK.

The start and end conditions for UWB ranging communication may be set in the same way as the LE-CS ranging communication. When the condition for starting UWB ranging communication is satisfied, the DK-ECU 10 sends a request to the anchor 30 to start UWB ranging. When the condition for ending or terminating UWB ranging communication is satisfied, the DK-ECU 10 sends a request to the anchor 30 to terminate the UWB ranging.

In the above embodiments, four antenna paths are configured by combining two terminal antennas and two anchor antennas. The antenna configurations of the mobile terminal 110 and the anchor 30 may be modified as appropriate. For example, the mobile terminal or the anchor may have only one antenna. The mobile terminal and the anchor each may have three or more antennas.

A sniffer system is applied to the vehicle-mounted key system 100 according to the modification example 4 of the above-described embodiment. In the modification example 4, the DK-ECU 10 (gateway module 13) acquires identification information (terminal ID) to identify the mobile terminal 110 in the process of establishing communication with the mobile terminal 110. The DK-ECU 10 provides the anchor 30 with ID information and other data obtained through communication with the mobile terminal 110. The anchor 30 obtains the terminal ID from the DK-ECU 10 by eavesdropping on the communication between the DK-ECU 10 and the mobile terminal 110. As a result, the anchor 30 can perform RTT ranging and phase difference ranging without performing LE communication with the mobile terminal 110. Such processing may be particularly performed when limiting the frequency of the CW signal (see FIG. 22, S428).

In the modification example 5 of the first and seventh embodiments described above, as a process to restrict the operation of unnecessary anchor 3D, the communication control unit 52 limits the number of anchor antennas 31 and 32 of the unnecessary anchor 3D in LE-CS ranging. In the modification example 6, as a process to restrict the operation of the unnecessary anchor 3D, the communication control unit 52 cancels the activation of unnecessary anchor 3D. By limiting the operation of unnecessary anchor 3D as shown in these modification examples 5 and 6, it is possible to reduce the communication occupancy rate and, consequently, suppress radio interference.

In the ranging communication process of the modification example 7, which is a modification of the fourth embodiment, determining of whether there is previously acquired position information (see FIG. 22, S421) is omitted. In the modification example 7, the RSSI ranging may be performed first unconditionally.

In the above embodiment of the vehicle-mounted key system 100, the DK-ECU 10 is configured as an independent electronic control unit. In the modification example 8 of the above embodiment, the digital key-related functions implemented by the DK-ECU 10 may be integrated with another ECU, which is configured to implement different function. Another ECU may include, for example, a central control unit (integrated ECU) that is equipped with a high-performance processor and plays a central role in the electronic platform of vehicle Hv by integrating and controlling a large number of on-board ECUs. In the modification example 8, the central control unit corresponds to the position determination device or the control device, and the vehicle-mounted key system including the central control unit corresponds to the position determination system.

In the above embodiments, the respective functions provided by the processing circuit 50 can be also provided by software and hardware for executing the software, only software, only hardware, and complex combinations of software and hardware. When such functions are provided by electronic circuits as hardware, each function can be provided by a digital circuit including a large number of logic circuits, or an analog circuit.

Each processor in the above embodiment is implemented by hardware circuit for arithmetic processing coupled with RAM. The processing unit includes at least one calculation core, such as a central processing unit (CPU) or a graphics processing unit (GPU). Such a processing unit including a processor may further include an FPGA (Field-Programmable Gate Array), an NPU (Neural Network Processing Unit), and other IP cores equipped with dedicated functions. The processing unit may be configured to be individually mounted on a printed circuit board, or may be configured to be mounted on an application specific integrated circuit (ASIC), an FPGA, or the like.

In the above embodiment, the form of the storage medium (a non-transitory tangible computer-readable medium, a non-transitory tangible storage medium) that stores various programs (position determination programs) may be changed as appropriate. The storage medium is not limited to a configuration provided on a circuit board, but may be provided in the form of a memory card or the like, inserted into a slot, and electrically connected to the processing circuit. The storage medium may be an optical disc, hard disk drive, or solid-state drive, which serves as the source for copying or distributing the program to the processing circuit, etc.

The vehicle equipped with the vehicle-mounted key system is not limited to a common private passenger car (personally owned vehicles, POV). The vehicle equipped with the vehicle-mounted key system may include rental cars, manned taxis, ride-sharing vehicles, cargo vehicles, and buses. The vehicle equipped with the vehicle-mounted key system 100 may be a right-hand drive vehicle or a left-hand drive vehicle. The configuration of the terminal area may be changed as appropriate depending on the steering wheel position of the vehicle Hv. The vehicle-mounted key system is not limited to four-wheeled vehicles, but may be installed in various types of mobile vehicles such as two-wheeled vehicles (motorcycles), ships, airplanes, railway vehicles, and construction machinery.

The controller and the method thereof described according to the present disclosure may be implemented by a dedicated computer constituting a processor programmed to execute one or multiple functionalities embodied by a computer program. Alternatively, the device and the method thereof according to the present disclosure may be implemented by a dedicated hardware logic circuit. Alternatively, the device and the method thereof according to the present disclosure may be implemented by one or more dedicated computers implemented by a combination of processor that executes computer program and one or more hardware logic circuits. The computer program may be stored in a computer-readable non-transitory tangible storage medium as instructions to be executed by a computer.

### (Disclosure of Technical Ideas)

The present disclosure includes multiple technical ideas described in multiple items listed below. Some features may be described in a multiple dependent form, in which subsequent features alternatively refer to preceding features. Some items may be written in a multiple dependent form referring to another multiple dependent form. The technical ideas described in the multiple dependent form defines multiple technical ideas.

### (Technical Idea 1)

A position determination system includes a plurality of anchors (30) each configured to perform a ranging communication to measure a distance to a mobile terminal (110), and a control device (10) configured to control the plurality of anchors. Each of the plurality of anchors performs a channel sounding ranging using Bluetooth low energy communication and acquires ranging data related to phase difference or time of flight. At least one of the control device or one of the plurality of anchors includes a processing circuit (50). The processing circuit includes a communication control unit (52) configured to determine a valid anchor among the plurality of anchors based on information related to a position of the mobile terminal, and restrict the channel sounding ranging in the remaining invalid anchor other than the valid anchor, and a position specifying unit (53) configured to specify the position of the mobile terminal based on the ranging data of the valid anchor.

### (Technical Idea 2)

In the position determination system according to technical idea 1, the control device specifies a terminal area where the mobile terminal is positioned based on an intensity value related to a radio wave intensity of the Bluetooth low energy communication. The communication control unit is configured to determine the valid anchor among the plurality of anchors based on information related to the terminal area specified based on the intensity value.

### (Technical Idea 3)

In the position determination system according to technical idea 1 or 2, the communication control unit is configured to specify a terminal area where the mobile terminal is positioned using the ranging data acquired by the plurality of anchors and determine the valid anchor among the plurality of anchors based on information of the terminal area specified using the ranging data.

### (Technical Idea 4)

In the position determination system according to technical idea 2 or 3, the processing circuit further includes an information storage unit (51) configured to store correlation information which correlates the terminal area to the valid anchor. The communication control unit is configured to determine the valid anchor corresponding to the terminal area based on the correlation information.

### (Technical Idea 5)

In the position determination system according to any one of technical ideas 2 to 4, the communication control unit is configured to calculate a moving speed of the mobile terminal based on the ranging data acquired by the plurality of anchors and determine the valid anchor based on the moving speed of the terminal and the terminal area.

### (Technical Idea 6)

In the position determination system according to any one of technical ideas 2 to 5, the communication control unit is configured to calculate a moving direction of the mobile terminal based on the ranging data acquired by the plurality of anchors and determine the valid anchor based on the moving direction of the terminal and the terminal area.

### (Technical Idea 7)

In the position determination system according to any one of technical ideas 1 to 6, in a case where the ranging communication is continued after the position specifying unit has determined the position of the mobile terminal, the communication control unit determines the valid anchor again based on latest ranging data.

### (Technical Idea 8)

In the position determination system according to any one of technical ideas 1 to 7, as a process to restrict the channel sounding ranging in the invalid anchor, the communication control unit at least stops the invalid anchor to perform a transmission and reception of signals for the channel sounding ranging.

### (Technical Idea 9)

In the position determination system according to any one of technical ideas 1 to 7, as a process to restrict the channel sounding ranging in the invalid anchor, the communication control unit restricts a frequency used by the invalid anchor in the channel sounding ranging, or restricts a quantity of antennas (31, 32) used by the invalid anchor in the channel sounding ranging.

### (Technical Idea 10)

A position determination program determines a position of a mobile terminal (110) by performing a ranging communication using multiple anchors, and is executed by at least one processor (21, 41). The position determination program includes instructions for: determining a valid anchor among the multiple anchors based on information related to the position of the mobile terminal (S21 to S24, S721 to S724); performing a channel sounding ranging according to Bluetooth low energy communication using the valid anchor and acquiring ranging data related to phase difference or time of flight (S25 to S29, S725 to S729); restricting a channel sounding ranging in the remaining invalid anchor other than the valid anchor (S30 to S34, S730 to S734); and specifying, based on the ranging data acquired by the valid anchor, the position of the mobile terminal (S35, S735).

### (Technical Idea 12)

A position determination system includes a plurality of anchors (30) each configured to perform a ranging communication to measure a distance to a mobile terminal (110) and a control device (10) configured to control the plurality of anchors. Each of the plurality of anchors performs a channel sounding ranging using Bluetooth low energy communication. An execution mode of the channel sounding ranging includes at least a first mode in which time of flight of a signal is calculated by transmitting and receiving RTT packets, and a second mode in which a phase of a signal is calculated by transmitting and receiving a CW signal. At least one of the control device or one of the plurality of anchors includes a processing circuit (50). The processing circuit includes a communication control unit (52) configured to determine the execution mode to be performed by each of the plurality of anchors among the first mode and the second mode based on information related to a position of the mobile terminal. The processing circuit further includes a position specifying unit (53) configured to specify the position of the mobile terminal based on ranging data acquired by the plurality of anchors in the execution mode determined by the communication control unit.

### (Technical Idea 13)

In the position determination system according to technical idea 12, the control device specifies a terminal area where the mobile terminal is positioned based on an intensity value related to a radio wave intensity of the Bluetooth low energy communication. The communication control unit determines the execution mode to be performed by each of the plurality of anchors among the first mode and the second mode based on information related to the terminal area specified based on the intensity value.

### (Technical Idea 14)

In the position determination system according to technical idea 12 or 13, the communication control unit is configured to specify a terminal area where the mobile terminal is positioned based on the ranging data acquired by the plurality of anchors and determine the execution mode to be performed by each of the plurality of anchors among the first mode and the second mode based on information related to the terminal area specified based on the ranging data.

### (Technical Idea 15)

In the position determination system according to any one of technical ideas 12 to 14, each of the plurality of anchors transmits and receives the CW signal using multiple channels in the second mode. The communication control unit is configured to determine, based on information related to the position of the mobile terminal, whether to transmit and receive the CW signal using a specified reference number of channels or a limited number of channels, and the limited number is set to be less than the specified reference number.

### (Technical Idea 16)

In the position determination system according to any one of technical ideas 12 to 15, wherein each of the plurality of anchors has multiple antennas (31, 32) each configured to transmit and receive the CW signal. The communication control unit is configured to determine, based on information related to the position of the mobile terminal, whether to transmit and receive the CW signal using a specified reference number of antennas or a limited number of antennas, and the limited number is set to be less than the specified reference number.

### (Technical Idea 17)

In the position determination system according to technical idea 16, each of the multiple antennas included in each anchor corresponds to an anchor antenna. The anchor antenna transmits and receives the CW signal with at least one terminal antenna (121, 122) included in the mobile terminal. The communication control unit is configured to determine, based on information related to the position of the mobile terminal, whether to transmit and receive the CW signal using a specified reference number of communication path combinations of the anchor antenna and the terminal antenna or a limited number of communication path combinations of the anchor antenna and the terminal antenna, and the limited number is set to be less than the specified reference number.

### (Technical Idea 18)

In the position determination system according to any one of technical ideas 12 to 17, in a case where the ranging communication is continued after the position specifying unit has determined the position of the mobile terminal, the communication control unit determines the execution mode to be performed by each of the plurality of anchors again based on latest ranging data.

### (Technical Idea 19)

A position determination program determines a position of a mobile terminal (110) by performing a ranging communication using multiple anchors, and is executed by at least one processor (21, 41). The position determination program includes instructions for: determining, based on information related to the position of the mobile terminal, an execution mode of a channel sounding ranging using Bluetooth low energy communication to be performed by each of the multiple anchors among a first mode, in which time of flight of a signal is calculated by transmitting and receiving RTT packets, and a second mode, in which a phase of a signal is calculated by transmitting and receiving a CW signal (S422, S423, S522, S523, S622, S623); acquiring ranging data by performing the channel sounding ranging in the determined execution mode (S424, S425, S524, S525, S624, S625); and specifying the position of the mobile terminal based on the acquired ranging data (S430, S530, S630).

## Claims

1. A position determination system comprising:
a plurality of anchors (30) each configured to perform a ranging communication to measure a distance to a mobile terminal (110); and
a control device (10) configured to control the plurality of anchors,
wherein
each of the plurality of anchors performs a channel sounding ranging using Bluetooth low energy communication and acquires ranging data related to phase difference or time of flight,
at least one of the control device or one of the plurality of anchors includes a processing circuit (50), and
the processing circuit includes:
a communication control unit (52) configured to determine a valid anchor among the plurality of anchors based on information related to a position of the mobile terminal, and restrict the channel sounding ranging in the remaining invalid anchor other than the valid anchor; and
a position specifying unit (53) configured to specify the position of the mobile terminal based on the ranging data of the valid anchor.

2. The position determination system according to claim 1, wherein
the control device specifies a terminal area where the mobile terminal is positioned based on an intensity value related to a radio wave intensity of the Bluetooth low energy communication, and
the communication control unit is configured to determine the valid anchor among the plurality of anchors based on information related to the terminal area specified based on the intensity value.

3. The position determination system according to claim 1, wherein
the communication control unit is configured to:
specify a terminal area where the mobile terminal is positioned using the ranging data acquired by the plurality of anchors; and
determine the valid anchor among the plurality of anchors based on information of the terminal area specified using the ranging data.

4. The position determination system according to claim 2, wherein
the processing circuit further includes an information storage unit (51) configured to store correlation information which correlates the terminal area to the valid anchor, and
the communication control unit is configured to determine the valid anchor corresponding to the terminal area based on the correlation information.

5. The position determination system according to claim 2, wherein
the communication control unit is configured to:
calculate a moving speed of the mobile terminal based on the ranging data acquired by the plurality of anchors; and
determine the valid anchor based on the moving speed of the terminal and the terminal area.

6. The position determination system according to claim 2, wherein
the communication control unit is configured to:
calculate a moving direction of the mobile terminal based on the ranging data acquired by the plurality of anchors; and
determine the valid anchor based on the moving direction of the terminal and the terminal area.

7. The position determination system according to claim 1, wherein,
in a case where the ranging communication is continued after the position specifying unit has specified the position of the mobile terminal, the communication control unit determines the valid anchor again based on latest ranging data.

8. The position determination system according to claim 1, wherein,
as a process to restrict the channel sounding ranging in the invalid anchor, the communication control unit at least stops the invalid anchor to perform a transmission and reception of signals for the channel sounding ranging.

9. The position determination system according to claim 1, wherein,
as a process to restrict the channel sounding ranging in the invalid anchor, the communication control unit restricts a frequency used by the invalid anchor in the channel sounding ranging, or restricts a quantity of antennas (31, 32) used by the invalid anchor in the channel sounding ranging.

10. A position determination device, which controls each of multiple anchors to perform, as a ranging communication, a channel sounding ranging using Bluetooth low energy communication to measure a distance to a mobile terminal (110), the position determination device comprising:
a communication control unit (52) configured to determine a valid anchor among the plurality of anchors based on information related to a position of the mobile terminal, and restrict the channel sounding ranging in the remaining invalid anchor other than the valid anchor; and
a position specifying unit (53) configured to specify the position of the mobile terminal based on ranging data, which is acquired by the valid anchor and is related to phase difference or time of flight.

11. A method for determining a position of a mobile terminal (110) by performing a ranging communication using multiple anchors, the method being performed by executing a process using at least one processor (21, 41), the method comprising:
determining a valid anchor among the multiple anchors based on information related to the position of the mobile terminal (S21 to S24, S721 to S724);
performing a channel sounding ranging according to Bluetooth low energy communication using the valid anchor and acquiring ranging data related to phase difference or time of flight (S25 to S29, S725 to S729);
restricting a channel sounding ranging in the remaining invalid anchor other than the valid anchor (S30 to S34, S730 to S734); and
specifying, based on the ranging data acquired by the valid anchor, the position of the mobile terminal (S35, S735).

12. A position determination system comprising:
a plurality of anchors (30) each configured to perform a ranging communication to measure a distance to a mobile terminal (110); and
a control device (10) configured to control the plurality of anchors,
wherein
each of the plurality of anchors performs a channel sounding ranging using Bluetooth low energy communication,
an execution mode of the channel sounding ranging includes at least a first mode in which time of flight of a signal is calculated by transmitting and receiving RTT packets, and a second mode in which a phase of a signal is calculated by transmitting and receiving a CW signal,
at least one of the control device or one of the plurality of anchors includes a processing circuit (50), and
the processing circuit includes:
a communication control unit (52) configured to determine the execution mode to be performed by each of the plurality of anchors among the first mode and the second mode based on information related to a position of the mobile terminal; and
a position specifying unit (53) configured to specify the position of the mobile terminal based on ranging data acquired by the plurality of anchors in the execution mode determined by the communication control unit.

13. The position determination system according to claim 12, wherein
the control device specifies a terminal area where the mobile terminal is positioned based on an intensity value related to a radio wave intensity of the Bluetooth low energy communication, and
the communication control unit determines the execution mode to be performed by each of the plurality of anchors among the first mode and the second mode based on information related to the terminal area specified based on the intensity value.

14. The position determination system according to claim 12, wherein
the communication control unit is configured to:
specify a terminal area where the mobile terminal is positioned based on the ranging data acquired by the plurality of anchors; and
determine the execution mode to be performed by each of the plurality of anchors among the first mode and the second mode based on information related to the terminal area specified based on the ranging data.

15. The position determination system according to claim 12, wherein
each of the plurality of anchors transmits and receives the CW signal using multiple channels in the second mode,
the communication control unit is configured to determine, based on information related to the position of the mobile terminal, whether to transmit and receive the CW signal using a specified reference number of channels or a limited number of channels, and
the limited number is set to be less than the specified reference number.

16. The position determination system according to claim 12, wherein
each of the plurality of anchors has multiple antennas (31, 32) each configured to transmit and receive the CW signal,
the communication control unit is configured to determine, based on information related to the position of the mobile terminal, whether to transmit and receive the CW signal using a specified reference number of antennas or a limited number of antennas, and
the limited number is set to be less than the specified reference number.

17. The position determination system according to claim 16, wherein
each of the multiple antennas included in each anchor corresponds to an anchor antenna,
the anchor antenna transmits and receives the CW signal with at least one terminal antenna (121, 122) included in the mobile terminal,
the communication control unit is configured to determine, based on information related to the position of the mobile terminal, whether to transmit and receive the CW signal using a specified reference number of communication path combinations of the anchor antenna and the terminal antenna or a limited number of communication path combinations of the anchor antenna and the terminal antenna, and
the limited number is set to be less than the specified reference number.

18. The position determination system according to claim 12, wherein,
in a case where the ranging communication is continued after the position specifying unit has specified the position of the mobile terminal, the communication control unit determines the execution mode to be performed by each of the plurality of anchors again based on latest ranging data.

19. A position determination device, which controls each of multiple anchors (30) to perform, as a ranging communication, a channel sounding ranging using Bluetooth low energy communication to measure a distance to a mobile terminal (110), the position determination device comprising:
a communication control unit (52) configured to determine, based on information related to a position of the mobile terminal, an execution mode to be performed by each of the multiple anchors among a first mode, in which time of flight of a signal is calculated by transmitting and receiving RTT packets, and a second mode, in which a phase of a signal is calculated by transmitting and receiving a CW signal; and
a position specifying unit (53) configured to specify the position of the mobile terminal based on ranging data acquired by the multiple anchors in the execution mode determined by the communication control unit.

20. A method for determining a position of a mobile terminal (110) by performing a ranging communication using multiple anchors (30), the method being performed by executing a process using at least one processor (21, 41), the method comprising:
determining, based on information related to the position of the mobile terminal, an execution mode of a channel sounding ranging using Bluetooth low energy communication to be performed by each of the multiple anchors among a first mode, in which time of flight of a signal is calculated by transmitting and receiving RTT packets, and a second mode, in which a phase of a signal is calculated by transmitting and receiving a CW signal (S422, S423, S522, S523, S622, S623);
acquiring ranging data by performing the channel sounding ranging in the determined execution mode (S424, S425, S524, S525, S624, S625); and
specifying the position of the mobile terminal based on the acquired ranging data (S430, S530, S630).
